# EUROPÄISCHE PATENTANMELDUNG

(11) **EP 3 748 072 A1**
(43) Veröffentlichungstag der Anmeldung: **09.12.2020**
(21) Anmeldenummer: 19178170.7
(22) Anmeldetag: 04.06.2019
(51) Int. Cl.: D21C 3/00, D21C 5/00

(54) **VERFAHREN ZUM KONTINUIERLICHEN BEREITSTELLEN EINES CELLULOSE-AUFWEISENDEN AUFBEREITETEN AUSGANGSSTOFFS**

(71) Anmelder: LENZING AKTIENGESELLSCHAFT, 4860 Lenzing (AT)
(72) Erfinder: Herchl, Richard, 4910 Ried im Innkreis (AT); Weilach, Christian, 4840 Vöcklabruck (AT)
(74) Vertreter: Dilg, Haeusler, Schindelmann Patentanwaltsgesellschaft mbH

(57) **Zusammenfassung**

Es wird ein Verfahren zum kontinuierlichen Bereitstellen eines aufbereiteten Cellulose-aufweisenden Ausgangsstoffs (110), insbesondere als Ausgangsstoff zum Herstellen eines cellulosischen Formkörpers (102), bereitgestellt. Das Verfahren weist hierbei auf: i) Zuführen (10) eines Cellulose-aufweisenden Ausgangsstoffs (101), welcher insbesondere ein Feststoff ist, mit einer vordefinierten Zusammensetzung zu einer Reaktorvorrichtung (105), ii) kontinuierliches Aufbereiten (20) des Ausgangsstoffs (101) in der Reaktorvorrichtung (105), um den aufbereiteten Cellulose-aufweisenden Ausgangsstoff (110) zu erhalten, und iii) Abführen (30) des aufbereiteten Cellulose-aufweisenden Ausgangsstoffs (110) aus der Reaktorvorrichtung (105).

## Beschreibung

Die Erfindung betrifft ein Verfahren zum kontinuierlichen Bereitstellen eines Cellulose-aufweisenden aufbereiteten Ausgangsstoffs aus einem Cellulose-aufweisenden Ausgangsstoff, welcher eine vordefinierte Zusammensetzung hat. Weiterhin betrifft die Erfindung ein Verfahren zum Herstellen eines, insbesondere regenerierten, cellulosischen Formkörpers aus dem aufbereiteten Ausgangsstoff. Ferner betrifft die Erfindung ein Verwenden eines kontinuierlichen Kochaggregats zum kontinuierlichen Aufbereiten eines Cellulose-aufweisenden Ausgangsstoffs, insbesondere Alttextilien, mit einer vordefinierten Zusammensetzung.

Die Erfindung kann sich somit auf das technische Gebiet des Bereitstellens von aufbereiteten, Cellulose-haltigen Ausgangsstoffen beziehen. Insbesondere kann sich die Erfindung auf das technische Gebiet des Herstellens eines (regenerierten) cellulosischen Formkörpers aus einem aufbereiteten, Cellulose-haltigen Ausgangsstoff beziehen. Ferner kann sich die Erfindung auf das technische Gebiet des Recycelns von Feststoffen, insbesondere Alttextilien, beziehen.

Das Bereitstellen eines Cellulose-haltigen, aufbereiteten Ausgangsstoffes, z.B. für die Herstellung eines (regenerierten) cellulosischen Formkörpers, wird konventionell gewöhnlich mittels eines diskontinuierlichen Herstellungsverfahrens durchgeführt. Ein Cellulose-aufweisender Ausgangsstoff, welcher ein Feststoff ist, und welcher aufbereitet werden soll, weist aber meist keine homogene Zusammensetzung auf. Stattdessen können die stofflichen Zusammensetzungen von beispielsweise Alttextilien, welche als fester Ausgangsstoff verwendet werden können, stark schwanken. Es bietet sich daher ein diskontinuierlicher Aufbereitungsprozess an, bei welchem der Ausgangsstoff Batch-weise zugeführt wird. Auf diese Weise können die Prozessbedingungen der Zusammensetzung jedes Batches individuell angepasst werden. Gemäß einem Beispiel wird gewöhnlich ein diskontinuierlich betriebenes Kochaggregat verwendet, welches zunächst mit dem Ausgangsstoff (erstes Batch) und zumindest einem Aufschlussmittel oder Reaktionsmedium befüllt wird. Danach wird das Kochaggregat aufgeheizt, um z.B. im Fall von Holzschnitzeln, das Lignin zu lösen und die Gewinnung der Cellulose zu ermöglichen. Die erhaltene Suspension mit der gewonnenen Cellulose wird dann abgeführt und Rückstände werden aus dem Kochaggregat entfernt. Nach einem zusätzlichen Reinigungsschritt wird der Reaktor dann mit einem neuen, zweiten Batch befüllt und der diskontinuierliche Prozess beginnt erneut. Zusammengefasst werden also eine Vielzahl von Arbeitsschritten benötigt, welche wiederum eine Vielzahl von Instrumenten der Mess- und Regelungstechnik erfordern. Insgesamt ist die Steuerung dieser Prozesse herausfordernd, denn jeder Batch hat andere (stoffliche) Eigenschaften und die Betriebsbedingungen müssen jeweils angepasst werden. Durch die Vielzahl von Einzelschritten entfällt weiterhin die Möglichkeit, ein großes, kompaktes Aggregat bereitzustellen. Stattdessen werden die Schritte auf viele einzelne Aggregate verteilt. Letztlich ist auch der Energieverbrauch relativ hoch, denn beispielsweise muss der Kocher für jeden Batch erneut hochgeheizt werden.

Es ist eine Aufgabe der vorliegenden Erfindung, einen aufbereiteten Cellulose-haltigen Ausgangsstoff (z.B. zum Herstellen eines (regenerierten) cellulosischen Formkörpers) auf effiziente, robuste, und ressourcensparende Weise bereitzustellen.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Aspekt der vorliegenden Erfindung ist ein Verfahren zum kontinuierlichen Bereitstellen eines aufbereiteten Cellulose-aufweisenden Ausgangsstoffs (wobei der Ausgangsstoff insbesondere zum Herstellen eines (weiter insbesondere regenerierten) cellulosischen Formkörpers geeignet ist) beschrieben. Das Verfahren weist auf: i) Zuführen eines Cellulose-aufweisenden Ausgangsstoffs, welcher insbesondere ein Feststoff ist (weiter insbesondere Alttextilien), mit einer vordefinierten Zusammensetzung zu einer Reaktorvorrichtung (z.B. ein Kochaggregat), ii) kontinuierliches Aufbereiten (insbesondere Gewinnen von Cellulose mittels Durchführen einer Kochung) des Cellulose-aufweisenden Ausgangsstoffs in der Reaktorvorrichtung, um den aufbereiteten Cellulose-aufweisenden Ausgangsstoff zu erhalten, und iii) Abführen des aufbereiteten Cellulose-aufweisenden Ausgangsstoffs aus der Reaktorvorrichtung.

Gemäß einem weiteren Aspekt der vorliegenden Erfindung ist ein Verfahren zum Herstellen eines (insbesondere regenerierten) cellulosischen Formkörpers beschrieben. Das Verfahren weist auf: i) Bereitstellen des oben beschriebenen aufbereiteten Cellulose-aufweisenden Ausgangsstoffs, und ii) Bilden des cellulosischen Formkörpers aus dem aufbereiteten Cellulose-aufweisenden Ausgangsstoff.

Gemäß einem weiteren Aspekt der vorliegenden Erfindung ist ein Verwenden eines kontinuierlichen Kochaggregats beschrieben zum kontinuierlichen Aufbereiten eines Cellulose-aufweisenden Ausgangsstoffs (insbesondere Alttextilien) mit einer vordefinierten Zusammensetzung.

Im Rahmen dieses Dokuments kann unter dem Begriff "Cellulose" insbesondere eine organische Verbindung verstanden werden, die Bestandteil pflanzlicher Zellwände ist oder synthetisch hergestellt werden kann. Cellulose ist ein Polysaccharid (d.h. ein Vielfachzucker). Cellulose ist unverzweigt und weist typischerweise mehrere hundert bis zehntausende β-D-Glucose-Moleküle (β-1,4-glycosidische Bindung) bzw. Cellobiose-Einheiten auf. Aus Cellulosemolekülen werden von Pflanzen kontrolliert Cellulosefasern aufgebaut. Mit einem technischen Prozess können Cellulosemoleküle unter Bildung von Regeneratfasern zusammengelagert werden, zum Beispiel als reißfeste Fasern.

Im Rahmen dieses Dokuments kann unter dem Begriff "Formkörper" insbesondere ein zwei- oder dreidimensionaler geometrischer Körper verstanden werden, der ein Resultat eines Verfahrens zum Herstellen bzw. Wiedergewinnen von Cellulose ist. Insbesondere kann unter einem Formkörper ein zwei- oder dreidimensionales Objekt verstanden werden, das Cellulose aufweist oder daraus besteht und aus gelöstem Zellstoff hergestellt wird. Formkörper können insbesondere Lyocell-Formkörper, Viskose-Formkörper, Modal-Formkörper, oder Papierformkörper (Papierstoff) sein. Typische Formkörper sind Filamente, Fasern, Schwämme und/oder Filme. Grundsätzlich eignen sich alle Arten von Celluloseformkörpern für Ausführungsbeispiele der Erfindung. Dabei sind als Fasern sowohl Endlosfilamente als auch geschnittene Stapelfasern mit herkömmlichen Abmessungen (zum Beispiel 38 mm Länge) und Kurzfasern zu verstehen. Zur Herstellung von Fasern kommen dabei sowohl Verfahren mit Abzugseinrichtungen nach einer oder mehreren Extrusionsdüsen als auch andere Verfahren, wie insbesondere Melt-Blowing-Verfahren, in Frage. Alternativ zu Fasern kann als Formkörper auch eine Cellulose aufweisende Folie hergestellt werden, d.h. ein flächiger und im Wesentlichen homogener Film mit oder aus Cellulose. Folien können insbesondere dadurch hergestellt werden, dass durch Einstellung der Prozessparameter eines Lyocell-Verfahrens ein Koagulieren zumindest teilweise erst nach Auftreffen der Filamente auf einer Aufnahmefläche ausgelöst wird. Unter Folien können flächige Celluloseformkörper verstanden werden, wobei die Dicke dieser Folien einstellbar ist (zum Beispiel durch Auswahl einer Anzahl seriell angeordneter Düsenbalken). Andere Ausführungsformen eines Formkörpers sind ein Gewebe und ein Vlies aus Cellulosefilamenten bzw. aus Cellulosefasern, insbesondere ein Spinnvlies aus integral miteinander verschmolzenen ("merging") im Wesentlichen kontinuierlichen Cellulosefilamenten ("melt blown"). Hierbei kann unter einem Gewebe insbesondere ein textiles Flächengebilde aus mindestens zwei (vorzugsweise rechtwinklig oder nahezu rechtwinklig) verkreuzten Fadensystemen (oder Fasersystemen) verstanden werden, wobei Fäden (oder Fasern) in Längsrichtung als Kettfäden und Fäden (oder Fasern) in Querrichtung als Schussfäden bezeichnet werden können. Ein Vlies oder Nonwoven kann als ungeordnetes (insbesondere in Wirrlage vorliegendes) Gebilde aus Filamenten oder Fasern oder geschnittenen Garnen begrenzter Länge bezeichnet werden, die zu einer Faserschicht oder einem Faserflor zusammengefügt und (insbesondere reibschlüssig) miteinander verbunden sind. Ein Formkörper kann auch in der Gestalt einer Kugel geschaffen werden. Als Formkörper können auch Cellulose aufweisende Partikel, wie insbesondere Beads (d.h. ein Granulat bzw. Kügelchen) oder Flakes, bereitgestellt werden, die in dieser Form weiterverarbeitet werden können. Mögliche Celluloseformkörper sind also auch partikuläre Strukturen wie Granulat, sphärische Pulver oder Fibride. Eine Formgebung eines Formkörpers erfolgt bevorzugt durch die Extrusion einer cellulosehaltigen Spinnlösung durch eine Extrusionsdüse, da auf diese Weise große Mengen der Celluloseformkörper mit sehr einheitlicher Form hergestellt werden können. Ein weiterer möglicher Celluloseformkörper ist ein Schwamm oder allgemeiner ein poröser Formkörper.

Die genannten Formkörper können gemäß exemplarischen Ausführungsbeispielen zum Beispiel zur Herstellung von Garnen, Textilien, Gelen, Papier, Karton, Filtern, oder Verbundwerkstoffen verwendet werden.

Im Rahmen dieses Dokuments kann unter dem Begriff "Lyocell-Verfahren" insbesondere ein Verfahren zum Herstellen von Cellulose nach einem Direkt-Lösemittelverfahren verstanden werden. Die Cellulose kann für das Lyocell-Verfahren aus einem Ausgangsstoff gewonnen werden, der diese Cellulose enthält. Der Ausgangsstoff kann bei dem Lyocell-Verfahren in einem geeigneten Lösungsmittel (insbesondere aufweisend tertiäre Aminoxide wie zum Beispiel N-Methylmorpholin-N-oxid (NMMO) und/oder ionische Flüssigkeiten, d.h. niedrig schmelzende Salze, die aus Kationen und Anionen aufgebaut sind) gelöst werden. Das Lösen kann insbesondere durch Wasserentzug und/oder ohne chemische Modifizierung erfolgen. Die erhaltene Lösung, die auch als Dope oder Spinnlösung bezeichnet werden kann, kann bei dem Lyocell-Verfahren anschließend durch eine oder mehrere Spinndüsen gepresst werden. Dadurch gebildete Filamente können während und/oder nach ihres freien oder gesteuerten Fallens durch einen Luftspalt in einem wasserhaltigen Bad (insbesondere in einem Bad mit wässriger NMMO-Lösung) und/oder in dem Luftspalt befindliche Luftfeuchtigkeit ausgefällt werden.

Lyocell bezeichnet eine Cellulose aufweisende Regeneratfasergattung, die nach einem Direkt-Lösemittelverfahren hergestellt wird. Die Cellulose wird für das Lyocell-Verfahren typischerweise aus dem Rohstoff Holz extrahiert. Der so gewonnene Zellstoff kann anschließend in N-Methylmorpholin-N-oxid (NMMO), einem Lösungsmittel, durch Wasserentzug ohne chemische Modifizierung gelöst, filtriert und anschließend durch Spinndüsen gepresst werden. Die so geformten Filamente werden nach Passieren eines Luftspaltes in einem Bad mit wässriger NMMO-Lösung ausgefällt, und anschließend zu Stapelfasern geschnitten.

Im Rahmen dieses Dokuments kann unter dem Begriff "Viskoseverfahren" insbesondere ein Verfahren zum Herstellen von Cellulose nach einem Nassspinnverfahren verstanden werden. Die Cellulose kann für das Viskoseverfahren aus einem Ausgangsstoff (insbesondere Holz oder ein Holzzellstoff) gewonnen werden, der diese Cellulose enthält.

Im Rahmen dieses Dokuments kann unter dem Begriff "Viskoseverfahren" ein Xanthogenatverfahren verstanden werden. In aufeinanderfolgenden Prozessstufen kann bei dem Viskoseverfahren, welches als Xanthogenatverfahren durchgeführt wird, der Ausgangsstoff zuerst mit einer Base (zum Beispiel mit Natronlauge) behandelt werden, wodurch sich Alkalicellulose bildet. Bei einer anschließenden Umsetzung dieser Alkalicellulose mit Schwefelkohlenstoff bildet sich Cellulose-Xanthogenat. Daraus kann durch weitere Zugabe einer Base (insbesondere von Natronlauge) eine Viskose-Spinnlösung erzeugt werden, die durch eine oder mehrere Spinndüsen gepresst werden kann. In einem Spinnbad entstehen durch Koagulation Viskose-Filamente. Die so hergestellten Viskose-Filamente werden im Anschluss z.B. zu Viskose-Stapelfasern geschnitten.

Im Rahmen dieses Dokuments kann unter dem Begriff "Viskoseverfahren" auch ein Carbamatverfahren verstanden werden, bei welchem anstelle von Schwefelkohlenstoff Ammoniak zur Herstellung eines löslichen Cellulosederivates eingesetzt wird. Dabei entsteht anstelle des Cellulose-Xanthogenats das sogenannte Cellulose-Carbamat. Analog der Weiterverwendung des Cellulose-Xanthogenats wird aus dem Cellulose-Carbamat eine spinnfähige Lösung hergestellt, aus welcher, nach dem Pressen durch eine oder mehrere Spinndüsen, in einem Spinnbad Cellulose-Filamente regeneriert werden können.

Weiter kann im Rahmen dieses Dokuments unter dem Begriff "Viskoseverfahren" auch ein Kaltalkaliverfahren verstanden werden, bei welchem Cellulose ohne weitere Derivatisierung zum Xanthogenat oder Carbamat in einem temperierten, insbesondere gekühlten, wässrigen alkalischen Medium in Lösung gebracht wird. Die Temperatur des wässrigen alkalischen Mediums beträgt in einem Ausführungsbeispiel weniger als 20° C, insbesondere auch weniger als 5° C. Zur Verbesserung des Löseverhaltens können dem wässrigen alkalischen Medium Zusätze wie z.B. Harnstoff, Thioharnstoff, Zinkoxid, Polyethylenglykol oder Tenside beigefügt werden. Wiederum werden aus der Cellulose enthaltenden Spinnlösung, nach dem Durchtritt durch eine oder mehrere Spinndüsen, mittels Fällung in einem sauren oder alkalischen Spinnbad Cellulose-Filamente regeneriert.

Als Viskosefasern werden Chemiefasern bzw. Regeneratfasern bezeichnet, die mittels eines Viskoseverfahrens (insbesondere eines Xanthogenatverfahrens, eines Carbamatverfahrens oder eines Kaltalkaliverfahrens) genannten Nassspinnverfahrens hergestellt werden. Der Ausgangsrohstoff des Viskoseverfahrens ist hochreine Cellulose in Form von Chemiezellstoff.

Im Rahmen dieses Dokuments kann unter dem Begriff "Reste aus einer Kleidungsherstellung" insbesondere Ausschuss und/oder Verschnitt eines Cellulose aufweisenden oder daraus bestehenden Textils oder Garnes verstanden werden, wobei diese Reste während eines Verfahrens zum Herstellen von Kleidung anfallen. Beim Herstellen von Kleidung wird zum Beispiel ein Cellulose aufweisendes Textil als Ausgangsstoff hergestellt, aus dem dann flächige Teile (zum Beispiel in Form einer T-Shirt-Hälfte) ausgeschnitten werden. Übrig bleiben Reste, die gemäß einem exemplarischen Ausführungsbeispiel wieder einem Verfahren zum Herstellen eines Cellulose aufweisenden Formkörpers zugeführt werden können. Bei Resten aus einer Kleidungsherstellung kann es sich also um einen Cellulose aufweisenden oder daraus bestehenden Ausgangsstoff handeln, der zum Wiedergewinnen von Cellulose verwendet werden kann, bevor ein Verbraucher die Reste als Kleidung oder in anderer Weise verwendet hat. Reste aus einer Kleidungsherstellung können insbesondere aus im Wesentlichen reiner Cellulose gebildet sein, insbesondere ohne separate und nicht Cellulose aufweisende Fremdkörper (wie zum Beispiel Knöpfe, Textildruck oder Nähte).

Im Rahmen dieses Dokuments können unter dem Begriff "Altkleider" insbesondere Cellulose aufweisende Kleidungsstücke und/oder Heimtextilien (z.B. Bettwäsche) verstanden werden, die bei Rückgewinnung zumindest eines Teils der Cellulose bereits von einem Verbraucher benutzt (insbesondere getragen) worden sind. Bei Altkleidern kann es sich also um einen Cellulose aufweisenden Ausgangsstoff handeln, der erhebliche Mengen von Fremdstoffen aufweisen kann (aber nicht muss) und zum Wiedergewinnen von Cellulose verwendet werden kann, nachdem ein Verbraucher die Altkleider als Kleidung oder in anderer Weise verwendet hat. Altkleider können insbesondere aus einer Mischung aus Cellulose und einem oder mehreren Fremdstoffen gebildet sein, insbesondere aufweisend (insbesondere bei Kleidungsstücken häufig verwendeten) synthetischen Kunststoff (wie zum Beispiel Polyester und/oder Elastan) und/oder separate und nicht Cellulose aufweisende Fremdkörper (wie zum Beispiel Knöpfe, Textildruck oder Nähte). Unter Polyester werden insbesondere Polymere mit Esterfunktionen (R-[-CO-O-]-R) in ihrer Hauptkette verstanden. Zu Polyestern gehören Polycarbonate und Polyethylenterephthalat. Unter Elastan wird insbesondere eine dehnbare Chemiefaser mit hoher Elastizität verstanden. Ein Elastan zugrundeliegendes Blockcopolymer kann einen Massenanteil von mindestens 85 % Polyurethan enthalten.

Im Rahmen dieses Dokuments können unter dem Begriff "Alttextilien" sowohl "Altkleider" als auch "Reste einer Kleiderherstellung" verstanden werden.

Im Rahmen dieses Dokuments können unter dem Begriff "Textilien" sowohl "Neutextilien" als auch "Altkleider" und "Reste einer Kleiderherstellung" verstanden werden.

Der Begriff "Neutextilien" umfasst textile Rohstoffe (Naturfasern, Chemiefasern), und nichttextile Rohstoffe, die durch ein oder mehr Verfahren zu linien-, flächenförmigen oder räumlichen Produkten verarbeitet wurden. Der Begriff "Neutextilien" kann sich sowohl mit dem Begriff "Ausschuss aus der Kleiderherstellung" decken als auch fertige Produkte (z.B. Kleidung, Bettwäsche) bezeichnen, wobei letztere im Wesentlichen noch nicht von einem Benutzer verwendet/getragen wurden. In einem Ausführungsbeispiel wird zwischen Alttextilien und Neutextilien unterschieden. In einem anderen Ausführungsbeispiel kann der Begriff Alttextilien auch diese Neutextilien umfassen (fertige Textil-Produkte, welche nicht verwendet werden, können ebenfalls als Alttextilien bzw. Kleidungsauschuss verstanden werden).

Im Rahmen dieses Dokuments kann unter dem Begriff "Papierherstellung" insbesondere verstanden werden, dass aus einem Cellulose-haltigen und aufbereiteten Ausgangsstoff ein cellulosischer Papierstoff gebildet wird, welcher dann zu einem Papierprodukt weiterverarbeitet wird. Alle Bearbeitungsschritte, welche von einem Cellulose-haltigen Ausgangsstoff zu einem Papierstoff führen, können also als Papierherstellungsverfahren bezeichnet werden. Ferner können auch alle Bearbeitungsschritte, welche von dem Papierstoff zu einem Papierprodukt führen, als Papierherstellung bezeichnet werden.

Ein "Papierstoff" kann in diesem Zusammenhang als ein Papierausgangsstoff verstanden werden, aus welchem dann ein Papierprodukt wie z.B. ein Papier, ein Karton, ein Filter oder dergleichen gebildet werden kann. Ein Papierstoff kann ein Verbundmaterial sein, das zumindest Zellstoff (Cellulose) und einen Binder enthält. Der Papierstoff kann hierbei in fester Form vorliegen, aber auch als Suspension, z.B. in Wasser. Ein "Papierstoff" kann in weiterem Sinne auch das Papierprodukt selbst umfassen. Ferner kann ein Papierstoff auch Papier oder papierähnliche Materialien, sowie Karton, Filtermaterial, Isolationsmatten, Saugvliese, faserverstärkte Flachmaterialien usw. umfassen. Papierstoff kann durch Entwässerung einer Fasersuspension, z.B. auf einem Sieb, gebildet werden. Der Papierstoff kann in nachfolgenden Arbeitsschritten weiter verdichtet und getrocknet werden. Ein Papierstoff kann aber auch ein flächiger Werkstoff (Faservlies) sein, der im Wesentlichen aus (Cellulose-) Fasern besteht.

Im Rahmen dieses Dokuments kann unter dem Begriff "Aufbereiten" insbesondere verstanden werden, dass ein eingehender Ausgangsstoff derart behandelt (aufbereitet) wird, dass sich ein ausgehender, aufbereiteter Ausgangsstoff in seinen chemischen/physikalischen Eigenschaften bzw. in seiner stofflichen Zusammensetzung zumindest teilweise von dem eingehenden Ausgangsstoff unterscheidet. Während eins Aufbereitungsprozesses kann beispielsweise ein Koch-Prozess, insbesondere eine alkalische Kochung, durchgeführt werden. Ferner können beispielsweise während eines Aufbereitungsprozesses synthetische Fasern wie Polyester von Cellulose (mittels der Kochung) abgereichert werden. Weiterhin kann ein Aufbereitungsprozess auch mechanische Trennschritte wie Dichtetrennung umfassen. Alternativ oder ergänzend zu dem Koch-Prozess können somit z.B. synthetische Fasern oder andere Fremdstoffe mechanisch entfernt werden.

Im Rahmen dieses Dokuments kann unter dem Begriff "Koch-Prozess" insbesondere ein chemischer Prozess verstanden werden, welcher zur Gewinnung von Zellstoff (Cellulose) aus einem Cellulose-haltigen Ausgangsstoff dient. Auch als "Kochung" bezeichnet, kann bei einem Koch-Prozess unter Temperatur und/oder Druckeinwirkung der Ausgangsstoff in einer Reaktorvorrichtung aufgeschlossen werden. Der Begriff "Reaktorvorrichtung" kann in diesem Zusammenhang jegliche Vorrichtung bezeichnen, welche es ermöglicht, einen in diesem Dokument beschriebenen Koch-Prozess durchzuführen. Beispielsweise kann die Reaktorvorrichtung ein Kochaggregat (z.B. einen Pandia Kocher) aufweisen. Ein Kochaggregat (Kocher) kann in diesem Zusammenhang auch als Digester bezeichnet werden. In einem Ausführungsbeispiel kann ein Kocher ein Transportmittel, z.B. eine Förderschnecke (Extruder) bzw. ein Förderband (conveyor) aufweisen, um den Ausgangsstoff durch den Kocher (kontinuierlich) hindurch zu transportieren. Ein Koch-Prozess kann alkalisch oder sauer sein. Insbesondere kann ein alkalischer Koch-Prozess zur Verseifung von Kunststoffen wie Polyethylenterephthalat (PET), Polyamid (PA), oder Polyurethan (PUR) führen. Gemäß einem Ausführungsbeispiel kann eine Kochlösung verwendet werden, welche die Cellulose nicht zersetzt. Beispielsweise kann eine alkalische Kochung mit Natriumhydroxid (NaOH) durchgeführt werden, um (Rest-) Polyester abzubauen und, um optional die Kettenlänge der CelluloseMoleküle einzustellen.

Bezüglich dem Aufschluss von Holzschnitzeln werden folgende Koch-Prozesse besonders häufig eingesetzt, welche z.B. auch für Alttextilien verwendet werden können:
i) ein Sulfatverfahren (auch als Sulfataufschluss oder -prozess bezeichnet, bzw. wegen der festeren Fasern auch als Kraft-Verfahren bezeichnet). Die aktiven Substanzen können Natronlauge und Natriumsulfid sein (Natriumsulfat (Na₂SO₄) kann für die Rückgewinnung verwendet werden). Der Ausgangsstoff (z.B. Holzschnitzel) kann mit der Kochlauge imprägniert und einem Kocher zugeführt werden. Bei einer Temperatur von beispielsweise bis zu 170°C können Holzbestandteile, wie Hemicellulosen und Lignine, in lösliche Formen überführt werden. Ein Abbau der Cellulosefasern kann hierbei unerwünscht sein;
ii) ein Sulfit-Verfahren, für welches z.B. flüssiges Schwefeldioxid verwendet werden kann. Der saure Sulfitprozess kann den Verbund zwischen Lignin und Cellulose durch Sulfonierung und Etherspaltung des Lignins lösen.

Im Rahmen dieses Dokuments kann unter dem Begriff "Zuführen" insbesondere verstanden werden, dass ein Ausgangsstoff mit einer vordefinierten Zusammensetzung bereitgestellt wird. Der Ausgangsstoff kann ein Feststoff (wie Alttextilien) sein und kann einer Reaktorvorrichtung direkt zugeführt werden (z.B. nach einem Zerkleinerungsschritt bzw. Schreddern). Der Ausgangstoff kann aber auch ein Feststoff sein und der Reaktorvorrichtung, nach einem zusätzlichen Lösungsschritt, in zumindest teilweise gelöster Form zugeführt werden. Im Rahmen dieser Anmeldung kann unter dem Begriff "Abführen" insbesondere verstanden werden, dass ein aufbereiteter Ausgangsstoff aus einer Reaktorvorrichtung nach einem Aufbereitungsschritt entnommen wird. Der aufbereitete Ausgangsstoff kann hierbei in gelöster Form (z.B. in einem Lösungsmittel) vorliegen oder auch als Feststoff. Zuführen bzw. Abführen können kontinuierlich erfolgen.

Im Rahmen dieses Dokuments kann unter dem Begriff "kontinuierlich" insbesondere verstanden werden, dass ein technischer Prozess ohne Unterbrechungen abläuft. In anderen Worten kann ein (kontinuierlicher, "steady state") lang andauernder Stofffluss (welcher zumindest die Schritte i) Zufuhr, ii) Aufbereitung, und iii) Abfuhr aufweist) stattfinden, welcher im Wesentlichen nicht unterbrochen wird. Im Gegensatz hierzu wird ein diskontinuierlicher Prozess ständig unterbrochen, denn ein Aufbereiten erfolgt hier Batch (bzw. Chargen)-weise. Bei dem kontinuierlichen Prozess können Zufuhr und Abfuhr ebenfalls kontinuierlich ablaufen. Beispielsweise kann eine Reaktionsvorrichtung zumindest teilweise rohrförmig ausgebildet sein, so dass zu einer ersten Öffnung kontinuierlich Ausgangsstoff zugeführt wird, und aus einer zweiten Öffnung kontinuierlich aufbereiteter Ausgangsstoff abgeführt werden kann, während dazwischen kontinuierlich aufbereitet und dabei weitergeschoben (z.B. hydrostatisch oder mittels einer Förderschnecke) wird.

Im Rahmen dieses Dokuments kann unter dem Begriff "vordefinierte Zusammensetzung" insbesondere ein Anteil bzw. eine Konzentration von zumindest zwei Zusammensetzungskomponenten innerhalb eines Ausgangsstoffes verstanden werden. Beispielsweise kann der Ausgangsstoff ein Alttextil sein und die Komponenten können Cellulosefasern und synthetische Fasern sein. In diesem Fall kann die Konzentration bzw. ein Konzentrationsbereich jeweils für Cellulosefasern und synthetische Fasern vordefiniert werden, um somit eine vordefinierte Zusammensetzung bereitzustellen. Die definierte Zusammensetzung kann hierbei absolute Werte oder Wertebereiche umfassen.

Im Rahmen dieses Dokuments kann unter dem Begriff "synthetische Faser insbesondere eine Faser verstanden werden, welche einen oder mehr synthetische Kunststoffe aufweist oder daraus besteht. Unter dem Begriff "synthetischer Kunststoff" kann insbesondere ein Stoff verstanden werden, welcher aus Makromolekülen aufgebaut ist und synthetisch hergestellt wird. Die jeweiligen Makromoleküle eines Kunststoffes sind Polymere und daher aus wiederholenden Grundeinheiten (Wiederholeinheiten) aufgebaut. Die Größe der Makromoleküle eines Polymers kann zwischen einigen tausend bis über eine Million Grundeinheiten variieren. Beispielsweise besteht das Polymer Polyethylen (PE) aus aneinander verbundenen, sich vielfach wiederholenden Ethyleneinheiten. Hierbei können die Polymere unverzweigte, verzweigte oder vernetzte Moleküle sein. Kunststoffe können bezüglich ihrer physikalischen Eigenschaften im Prinzip in drei Gruppen unterteilt werden: Thermoplaste, Duroplaste und Elastomere. Ferner können diese Eigenschaften auch in Untergruppen kombiniert sein, z.B. bei thermoplastischen Elastomeren. Wichtige Merkmale von Kunststoffen sind ihre technischen Eigenschaften, wie Formbarkeit, Härte, Elastizität, Bruchfestigkeit, Temperatur-, Wärmeformbeständigkeit und chemische Beständigkeit, die sich durch die Wahl der Makromoleküle, Herstellungsverfahren und in der Regel durch Beimischung von Additiven in weiten Grenzen variieren lassen. Typische Reaktionen zum Herstellen von synthetischem Kunststoff aus Monomeren oder Pre-Polymeren sind: Kettenpolymerisation, Polyaddition oder Polykondensation. Beispiele für synthetische Kunststoffe, welche insbesondere auch in Textilien verwendet werden, sind z.B. Polyurethan (PUR), insbesondere als Bestandteil von Elastan, Polyester (PE, z.B. Polyethylenterephthalat (PET)), Polyamid (PA, z.B. Nylon, Perlon) und Polyether, insbesondere Polyethylenglykol (PEG) als Bestandteil von Elastan.

Im Rahmen dieses Dokuments kann unter dem Begriff "Elastan" insbesondere ein synthetischer Kunststoff verstanden werden, welcher thermoplastische und elastische Eigenschaften aufweist. Elastan kann daher als thermoplastisches Elastomer (TPE) bezeichnet werden. Elastan kann als Block-Copolymer vorliegen, welches insbesondere durch die folgenden beiden Blöcke gekennzeichnet ist: Polyurethan (PUR) und Polyethylenglycolether (PEG). Hierbei können die PUR Segmente steife Abschnitte bilden, welche sich mit weichen, elastischen PEG Abschnitten abwechseln. PUR kann steife, gestreckte Abschnitte bilden, die sich längs zueinander anlagern und durch den Aufbau von Nebenvalenzkräften den Zusammenhalt z.B. einer Faser ermöglichen. Die gummiartigen PEG Blöcke (z.B. jeweils etwa 40 bis 50 Monomereinheiten) können hingegen stark zusammengeknäult vorliegen, wobei diese aber auch gestreckt werden können. Hierbei kann Elastan als Kräuselstruktur mit sehr hoher Dehnbarkeit (mehrere 100 %, z.B. 700 %) vorliegen. Die Dichte kann z.B. zwischen 1,1 und 1,3 g/cm³ betragen und die Festigkeit beispielsweise 5 bis 12 cN/tex. Die Elastizität kann hierbei temperaturabhängig sein. Ferner können unter dem Begriff "Elastan" sowohl Elastan selbst, als auch verwandte thermoplastische Elastomere (z.B. Elastollan, Desmopan, Texin und Utechllan) verstanden werden.

Gemäß einem exemplarischen Ausführungsbeispiel der Erfindung wird ein besonders effizientes, robustes, und ressourcenschonendes Verfahren zum Herstellen eines aufbereiteten Cellulose-aufweisenden Ausgangsstoffs dadurch bereitgestellt, dass ein kontinuierlicher Aufbereitungsprozess durchgeführt wird, welchem ein Cellulose-aufweisender Ausgangsstoff (ein Feststoff, insbesondere Alttextilien) in einer vordefinierten Zusammensetzung zugeführt wird. Ein kontinuierlicher Herstellungsprozess (insbesondere ein Kochprozess) kann verfahrenstechnisch einfacher umgesetzt werden als ein diskontinuierlicher Prozess. So kann beispielsweise ein großes Aggregat (z.B. eine Reaktorvorrichtung wie ein Kocher) eingesetzt werden anstelle vieler kleiner Aggregate. Hierdurch kann der Bedarf an Mess- und Regelungstechnik deutlich reduziert werden. Bei einem kontinuierlichen Aufbereitungsprozess kann ein stetiger Fluss ("steady state flow") erzeugt werden, also Einlass- und Auslass-Strom ("inlet und outlet stream") können als stetiger Fluss koordiniert werden. Dies kann operativ besonders gut steuerbar sein. Durch die kontinuierliche Betriebsweise kann ein höherer Durchsatz als bei einem diskontinuierlichen Prozess erreicht werden, denn "Stehzeiten" (z.B. Füllen eines Reaktors, Aufheizen, Leeren, Reinigen) entfallen. Der kontinuierliche Betrieb ermöglicht somit eine kompakte Bauweise.

Weiterhin kann der kontinuierliche Prozess deutlich ressourcenschonender, nachhaltiger und umweltfreundlicher durchgeführt werden, denn der Energie-(z.B. Dampf) Verbrauch kann gesenkt werden. Beispielsweise muss der Kocher nicht mit jedem Batch neu erhitzt werden (wie bei einem diskontinuierlichen Verfahren), sondern läuft (heizt) kontinuierlich. Auch aufgrund effizienterer Ausnutzung im Hinblick auf Anlagenbauweise kann Energie eingespart werden. Ferner kann der beschriebene Prozess auch effizient mit nachgeschalteten Prozessen (beispielsweise ein Bleichprozess) kombinierbar sein, welche dann ebenfalls kontinuierlich betrieben werden können.

Ein kontinuierlicher Koch-Prozess könnte Nachteile haben. So werden die Prozessbedingungen (z.B. Verweilzeit, Temperatur) in einem definierten Bereich festgelegt. Somit kann auf Änderungen in der Rohstoffqualität bzw. der Stoffzusammensetzung nicht flexibel/dynamisch reagiert werden. Es kann also keine individuelle Behandlung einzelner Ausgangsstoffe ermöglicht sein.

Gemäß einem exemplarischen Ausführungsbeispiel der Erfindung werden diese möglichen Nachteile aber gerade dadurch überwunden, dass der feste Ausgangsstoff (ausschließlich) mit einer vordefinierten Zusammensetzung bereitgestellt wird. Diese vordefinierte Zusammensetzung kann z.B. eine spezielle Mischung/Komposition aus Alttextilien sein. Anstatt den Prozess immer neu (bzw. Batch-weise) an die Stoffzusammensetzung des Ausgangsstoffs anzupassen (wie im diskontinuierlichen Verfahren der Fall), wurde nun überraschend gefunden, dass auf äußerst effiziente und robuste Weise stattdessen die Stoffzusammensetzung des festen Cellulose-aufweisenden Ausgangsstoffs an den Prozess angepasst werden kann (kontinuierliches Verfahren). Beispielsweise können eingehende Lieferungen von Alttextilien selektiv angereichert bzw. abgereichert werden, so dass die Gesamtzusammensetzung der vordefinierten Zusammensetzung entspricht. Hierbei können z.B. die Mengen an Cellulose und synthetischem Kunststoff in dem Ausgangsstoff auf genau definierte Konzentrationen eingestellt werden. Diese Konzentrationen können weiterhin vordefinierten Schwankungsbreiten unterworfen werden, so dass ein kontinuierlicher Aufbereitungsprozess ermöglicht ist, welcher mit deutlich weniger komplexer Mess- und Regelungstechnik auskommt. Einsparungen können sich also vor allem durch geringeren Regelbedarf ergeben (ein Aggregat mit hoher Kapazität im kontinuierlichen Betrieb anstelle mehrerer kleiner Aggregate mit kleinerer Kapazität im diskontinuierlichen Batchbetrieb).

Der Schritt des flexiblen Anpassens kann also auf den Ausgangsstoff vorverlagert werden, wodurch das gesamte Herstellungsverfahren in kontinuierlicher Betriebsweise effizienter und robuster wird.

Im Weiteren werden zusätzliche Ausführungsbeispiele der Verfahren und des Verwendens beschrieben.

Gemäß einem Ausführungsbeispiel weist der Cellulose-aufweisende Ausgangsstoff ganz oder teilweise Reste aus einer Kleidungsherstellung und/oder Altkleider auf. Dies kann den Vorteil bringen, dass Alttextilien auf sehr effiziente Weise recycelt werden können. Mit dem beschriebenen Verfahren können Alttextilien, welche naturgemäß eine sehr inhomogene Mischung darstellen, effizient einem kontinuierlichen Herstellungsprozess zugeführt werden. Dadurch, dass die Alttextilien Mischung einer vordefinierten Zusammensetzung unterworfen wird, kann eine kontinuierliche Aufbereitung eines Stromes von zugeführten Alttextilien als Cellulose-haltigem Ausgangsstoff ermöglicht werden.

In diesem Zusammenhang kann sich die Erfindung auf das technische Gebiet des Wiederverwendens (Recycling), insbesondere des Wiederverwendens von Alttextilien beziehen. Die Alttextilien können jeweils Cellulose und optional zumindest einen synthetischen Kunststoff aufweisen, und damit als Cellulosehaltige Ausgangsstoffe verwendet werden. Somit können Alttextilien wiederverwendet werden als Ausgangsstoffes mit einer vordefinierten Zusammensetzung zum kontinuierlichen Herstellen eines (regenerierten) cellulosischen Formkörpers, insbesondere wobei die Cellulose des regenerierten Formkörpers im Wesentlichen in Form von Lyocellfasern, Viskosefasern und/oder Papierfasern vorliegt.

In einem weiteren Ausführungsbeispiel kann der Aufbereitung der stofflichen Zusammensetzung der verwendeten Alttextil Mischung eine Vorsortierung vorgeschaltet werden. Alttextilien können üblicherweise in einem schlecht definierbaren (inhomogenen) Mix angeliefert werden. Gebrauchte Textilien können mit einer mechanischen, auch manuellen, Vorsortierung zur Ausscheidung völlig unbrauchbarer Anteile von z.B. Wolle, Metallfolien, Kunststoffvliesen, usw. vorselektioniert werden.

Gemäß einem Ausführungsbeispiel können Reste aus einer Kleidungsherstellung mit Altkleidern gemischt werden, um die vordefinierte Zusammensetzung bereitzustellen. Reste aus einer Kleidungsherstellung können z.B. Produktionsabfälle aus der Industrie sein und sind damit oftmals identifizierbar und teilweise sortenrein. Durch das Zusammenführen dieser beiden (Recycling-) Ströme kann sich eine vorteilhafte Alttextil Mischung bereitstellen lassen. Diese kann für die Herstellung eines cellulosischen Formkörper, z.B. eines Lyocellformkörpers, besonders gut geeignet ist.

Gemäß einem Ausführungsbeispiel weist das Verfahren ferner ein Einstellen der vordefinierten Zusammensetzung auf (insbesondere durch gezieltes Mischen verschiedener Eingangsströme mit bekannter Zusammensetzung). Das Einstellen kann hierbei aufweisen: i) ein selektives Anreichern zumindest einer Zusammensetzungskomponente und/oder ii) ein selektives Abreichern zumindest einer Zusammensetzungskomponente. Dies kann den Vorteil bereitstellen, dass die vordefinierte Zusammensetzung auf schnelle und robuste Weise erreicht werden kann.

Der Ausgangsstoff kann eine Mischung aus zwei oder mehr Zusammensetzungskomponenten sein, z.B. eine Alttextil Mischung mit Cellulosefasern und synthetischen Fasern. Zusammensetzungskomponenten können aber auch Kleidungsreste oder Altkleider einer bestimmten Art sein. Zum Beispiel kann ein reines Baumwollhemd eine Zusammensetzungskomponente sein, während die Sportbekleidung, welche hauptsächlich aus Polyester besteht, eine weitere Zusammensetzungskomponente sein kann. Um eine vordefinierte Zusammensetzung zu erreichen, können Chargen mit bekannten Zusammensetzungen (bekannten Mengen von Zusammensetzungskomponenten) gemischt werden, so dass die Mischung die vordefinierte Zusammensetzung aufweist. Wie oben beschrieben, können z.B. (Verschnitt) Reste aus der Kleidungsproduktion eine bekannte Zusammensetzung aufweisen. Ferner kann aber auch die Zusammensetzung, z.B. einer Altkleider Mischung, auf verschiedene Weisen bestimmt werden, z.B. durch einen geschulten Operator, oder durch, insbesondere optische, automatische Messmethoden. Basierend auf der bestimmten Zusammensetzung können dann weitere Alttextil bzw. Kleidungsreste (als Zusammensetzungskomponenten) zugegeben werden, um die vordefinierte Zusammensetzung zu erreichen. Gemäß einem Ausführungsbeispiel können Alttextilien mit sehr hohem Baumwollgehalt zugegeben werden, um den Cellulosegehalt zu erhöhen. Zusätzlich oder alternativ können auch Zusammensetzungskomponenten dem Ausgangsstoff entzogen werden. Beispielswiese kann gezielt Sportbekleidung entfernt werden, welche einen besonders hohen Anteil an Polyester aufweist. Für Feineinstellungen können sich die erwähnten Reste aus einer Kleiderherstellung, welche definierte Zusammensetzungen aufweisen können, besonders gut eignen.

Gemäß einem weiteren Ausführungsbeispiel weist das Abreichern des Verfahrens ferner auf: zumindest teilweises (selektives) Behalten eines synthetischen Kunststoffs in dem Ausgangsstoff. Hierbei kann der synthetische Kunststoff insbesondere einer aus der Gruppe sein, welche besteht aus Polyamid, Polyester, Polyurethan und Elastan. Dies kann den Vorteil haben, dass ein synthetischer Kunststoff nicht mehr besonders sauber bzw. rein abgereichert werden muss. Das Abreichern von kleinen Restkonzentrationen kann nämlich technisch durchaus herausfordernd und ressourcenintensiv sein kann.

Stattdessen kann synthetischer Kunststoff, z.B. Polyurethan, in dem Mischtextil verbleiben, wodurch aufwendige und kostenintensive Abreicherungsprozesse verringert werden können bzw. gar nicht mehr notwendig sind. Wenn zumindest ein Teil des Polyurethans Elastan zugeordnet ist, können zusätzlich noch weitere Vorteile erreicht werden, wie z.B. eine Verbesserung der Festigkeitswerte und/oder der Elastizität des herzustellenden Formkörpers.

Es können geringe Anteile (z.B. unter 2%) von z.B. Polyamiden und Polyestern in dem Recycling-Verfahren mitverarbeitet werden, um eine gute Einbindung in Cellulose zu erreichen. In einem Recycling-Verfahren kann dies ein deutlicher Vorteil sein, denn das zumindest teilweise Entfernen von weiteren synthetischen Polymeren, insbesondere in geringen Konzentrationen, kann unverhältnismäßig aufwändig sein. Die oben genannten weiteren synthetischen Kunststoffe können in Ausgangsstoffen wie Textilien sehr häufig und verbreitet enthalten sein. Daher stellt eine Akzeptanz geringer Restmengen eine massive Erleichterung eines Recycling-Verfahrens dar.

Gemäß einem weiteren Ausführungsbeispiel weist das kontinuierliche Aufbereiten ferner auf: Durchführen eines kontinuierlichen Koch-Prozesses, insbesondere unter Verwenden einer alkalischen Kochlösung, weiter insbesondere einer Natriumhydroxid-haltigen Kochlösung. Dies kann den Vorteil bereitstellen, dass robuste und erprobte Techniken direkt angewendet werden können.

Wenn als fester Ausgangsstoff Holzschnitzel verwendet werden, so kann eine Kochung in einem starken Aufschlussmittel/Reaktionsmedium wie Natriumhydroxid und Natriumsulfid das Lösen von Lignin ermöglichen, um dieses von der Cellulose abzutrennen. Werden als fester Ausgangsstoff Alttextilien verwendet, so kann auf diese Weise synthetischer Kunststoff gelöst werden, um die Cellulose in möglichst reiner Form bzw. mit einer erwünschten Restkonzentration an Polymeren, zu erhalten. Insbesondere kann ein Koch-Prozess, insbesondere mit NaOH (Natriumsulfid nicht notwendig, da Alttextilien kein Lignin enthalten), zur Verseifung von Kunststoffen wie PET, PA oder PUR führen, während die Cellulose nicht zersetzt wird.

Gemäß einem bevorzugten Ausführungsbeispiel kann die alkalische Kochung folgendermaßen durchgeführt werden: die Fasern, insbesondere bereits angereicherte cellulosische (oder vorwiegend cellulosischen) Fasern, können mit einer alkalischen Lösung (zum Beispiel Natriumhydroxid oder Kaliumhydroxid) in Kombination mit einem gasförmigen Oxidationsmittel (zum Beispiel O₂) in einem Kocher (z.B. einem Druckkessel) behandelt werden (vorzugsweise bei einem pH-Wert von mindestens 9), und zwar:
a) bei einer Temperatur zwischen 90°C und 185°C;
b) für eine Inkubationszeit von 45 Minuten bis 270 Minuten;
c) in der Anwesenheit eines cellulosestabilisierenden Additivs (zum Beispiel ein Magnesiumsalz, vorzugsweise Magnesiumsulfat; oder eine chelatbildende Verbindung auf Basis eines Übergangsmetalls, zum Beispiel Ethylendiamintetraessigsäure (EDTA)), vorzugsweise in einer Konzentration in einem Bereich zwischen 0,01 Gewichtsprozent und 5 Gewichtsprozent bezogen auf die zugeführten Fasern;
d) bei einer Alkali-Konzentration in einem Bereich zwischen 1 Gewichtsprozent und 35 Gewichtsprozent bezogen auf die zugeführten Fasern;
e) bei einem initialen Gasdruck in einem Bereich von 1 bar bis 21 bar (entsprechend ungefähr 0,1 MPa bis ungefähr 2,1 MPa).
Der erzeugte gelöste Zellstoff kann danach einer Waschprozedur unterzogen werden.

Insbesondere kann das Zuführen der alkalischen Lösung zum Abbauen nichtcellulosischer Fasern, insbesondere synthetischer Fasern, weiter insbesondere von Polyesterfasern, erfolgen. Besonders Polyester kann dadurch in wasserlösliche Konstituenten gespalten werden, welche mittels den im Prozess anfallenden Abwässern von den Cellulosefasern abgetrennt werden können. In dieser Prozedur kann zum Beispiel Polyester in die Monomere Ethylenglykol und Terephtalsäure gespalten werden. Diese sind wasserlöslich und können gemäß einem Ausführungsbeispiel über Prozessablaugen von den Cellulosefasern abgetrennt werden. Parallel zum Polyesterabbau können in diesem Kochprozess auch Celluloseabbaureaktionen ablaufen. Durch geeignete Wahl der Prozessparameter kann der Celluloseabbau gemäß einem Ausführungsbeispiel der Erfindung so gesteuert werden, dass ein gewisser Zielpolymerisationsgrad eingestellt wird. Dies ist vorteilhaft, da der Cellulosepolymerisationsgrad (ausgedrückt als Grenzviskositätszahl) häufig ein Spezifikationskriterium für Chemiezellstoff ist.

Im Folgenden werden einige Ausführungsbeispiel der vordefinierten Zusammensetzung beschrieben. Diese können den Vorteil bringen, dass ein kontinuierliches Bereitstellen des aufbereiteten Ausgangsstoffs dadurch effizient ermöglicht wird, dass die Prozessbedingungen auch langfristig stabil gehalten werden können. Um die vordefinierte Zusammensetzung zu quantifizieren können sowohl Konzentrationen als auch Schwankungsbreiten der Zusammensetzungskomponenten verwendet werden.

Im Rahmen dieses Dokuments kann der Begriff "Schwankungsbreite" eine Abweichung von einem vordefinierten Wert, bzw. einem Referenzwert, bezeichnen. Die Schwankungsbreite kann hierbei ein absoluter Wert oder ein relativer Wert sein. Die Schwankungsbreite kann auch eine Standardabweichung bezeichnen.

Übersicht Zusammensetzung der Rohstoffe in % (reiner Faseranteil ohne Fremdmaterialien wie Knöpfe etc.)

| Typ | Basis | Bevorzugt | Bes. bevorzugt |
|---|---|---|---|
| Cellulosische Fasern | >60 | >80 | >92,5 |
| Polyester | <30 | <16 | <5 |
| Polyamide | <4 | <1 | <0,5 |
| Polyacryl | <1 | <0,5 | <0,1 |
| Elastan(artige) | <5 | <2,5 | <1 |

Tolerierbare Schwankungsbreite: Für Cellulosische Fasern und Polyester ± 2,5 %, bevorzugt ± 1%, besonders bevorzugt <±0,50/0. Für Polyamid, Polyacryl und Elastan ± 0,5 %, bevorzugt ± 0,1%, besonders bevorzugt <±0,05%.

Gemäß einem weiteren Ausführungsbeispiel weist die vordefinierte Zusammensetzung cellulosische Fasern auf. Ferner weist die vordefinierte Zusammensetzung der cellulosischen Fasern eine Schwankungsbreite von 2,5% oder weniger, insbesondere von 1% oder weniger, weiter insbesondere von 0,5% oder weniger, auf.

Gemäß einem weiteren Ausführungsbeispiel weist die vordefinierte Zusammensetzung synthetische Fasern, insbesondere Polyesterfasern, auf. Ferner weist die vordefinierte Zusammensetzung der synthetischen Fasern, insbesondere der Polyesterfasern, eine Schwankungsbreite von 2,5% oder weniger, insbesondere von 1% oder weniger, weiter insbesondere von 0,5% oder weniger, auf.

Gemäß einem weiteren Ausführungsbeispiel weist die vordefinierte Zusammensetzung weitere synthetische Fasern auf. Ferner weist die vordefinierte Zusammensetzung der weiteren synthetischen Fasern eine Schwankungsbreite von 0,5% oder weniger, insbesondere von 0,1% oder weniger, weiter insbesondere von 0,05% oder weniger, auf. Die weiteren synthetischen Fasern weisen insbesondere zumindest eines aus der Gruppe auf, welche besteht aus: Polyamid, Polyacryl, und Elastan.

Gemäß einem weiteren Ausführungsbeispiel weist die vordefinierte Zusammensetzung 60% oder mehr, insbesondere 80% oder mehr, weiter insbesondere 92,5% oder mehr, cellulosische Fasern aufweist. Zusätzlich oder alternativ weist die vordefinierte Zusammensetzung 30% oder weniger, insbesondere 16% oder weniger, weiter insbesondere 5% oder weniger, synthetische Fasern, insbesondere Polyesterfasern, auf.

Gemäß einem weiteren Ausführungsbeispiel weist die vordefinierte Zusammensetzung zumindest eines der folgenden Merkmale auf:
i) die vordefinierte Zusammensetzung weist 4% oder weniger, insbesondere 1% oder weniger, weiter insbesondere 0,5% oder weniger, Polyamid auf;
ii) die vordefinierte Zusammensetzung weist 1% oder weniger, insbesondere 0,5% oder weniger, weiter insbesondere 0,1% oder weniger, Polyacryl auf;
iii) die vordefinierte Zusammensetzung weist 5% oder weniger, insbesondere 2,5% oder weniger, weiter insbesondere 1% oder weniger, Elastan auf.

Gemäß einem weiteren Ausführungsbeispiel weist die Reaktorvorrichtung einen kontinuierlichen Kocher auf. Dies hat kann den Vorteil haben, dass etablierte und erprobte Technologie direkt für das beschriebene Verfahren eingesetzt werden kann.

Verschiedene Kocher Systeme sind dem Fachmann bekannt, z.B. Pandia, Sprout-Waldron, Escher-Wyss, und Kamyr. Diese und weitere können direkt für das beschriebene Verfahren als kontinuierliche Kocher verwendet werden. Mit einem Kamyr-Kocher kann beispielsweise ein Sulfat- oder Sulfitprozess durchgeführt werden, wobei im Einfuhrbereich eine Temperatur von 110°C, im Mittelbereich eine Temperatur von etwa 140°C und im Ausfuhrbereich eine Temperatur von etwa 80°C herrscht.

Gemäß einem weiteren Ausführungsbeispiel weist das Verfahren ferner auf: Durchführen eines kontinuierlichen Nachfolge-Prozesses, insbesondere eines Bleich-Prozesses, nach dem kontinuierlichen Abführen. Dies hat den Vorteil, dass auf flexible Weise weitere Aufbereitungsprozesse dem Aufbereiten nachgeschaltet werden können und somit ebenfalls kontinuierlich betrieben werden können.

Kontinuierliche Nachfolge-Prozesse können beispielsweise bestimmte Reinigungsschritte oder ein Trocknen von Zellstoff-Masse (Pulpe) umfassen. Ferner kann ein Nachfolgeprozess ein Bleichen umfassen. Letzteres insbesondere dann, wenn zum Herstellen eines cellulosischen Formkörpers aus dem aufbereiteten Ausgangsstoff ein Papierstoff vorgesehen ist. Als Bleichen kann ein Prozess bezeichnet werden, welcher unerwünschte Färbungen entfernt oder abschwächt. Beim Bleichen kommen Bleichmittel zum Einsatz, bei welchen es sich um oxidierende oder reduzierende Verbindungen handelt, welche zumindest teilweise selektiv sein sollten. Beispielsweise können Bleichmittel farbgebende Substanzen angreifen, indem sie die Chromophore zerstören. Als Bleichmittel können z.B. Sauerstoff, Ozon, Wasserstoffperoxid, Chlor-Verbindungen (z.B. Chlordioxid oder Hypochlorit), aber auch Enzyme verwendet werden.

Das Bleichen kann zumindest eines aus einer Gruppe aufweisen, die besteht aus einem oxidativen Bleichen, einem reduktiven Bleichen und einem enzymatischen Bleichen. Gemäß einem bevorzugten Ausführungsbeispiel der Erfindung kann das Bleichen ein Durchführen einer sauren Wäsche, gefolgt vom Durchführen einer Ozonbleiche, wiederum gefolgt vom Durchführen einer Peroxidbleiche aufweisen. Durch das Bleichen können Farbstoffe und andere chemische Reststoffe in den wiederverwerteten Textilmaterialien entfernt werden.

Gemäß einem weiteren Ausführungsbeispiel weist das Bilden des cellulosischen Formkörpers aus dem aufbereiteten Ausgangsstoff eines auf aus der Gruppe welche besteht aus: einem Lyocellverfahren, einem Viskoseverfahren (insbesondere einem Xanthogenatverfahren, einem Carbamatverfahren, oder einem Kaltalkaliverfahren), einem Papierherstellungsverfahren. Dies kann den Vorteil bringen, dass besonders effiziente und erprobte Verfahren direkt auf den aufbereiteten Ausgangsstoff angewendet werden können, um einen cellulosischen Formkörper herzustellen.

Die erfindungsgemäß hergestellten Formkörper können zum Beispiel als Verpackungsmaterial, Fasermaterial, Textilverbundstoffe, Faserverbundstoffe, Faservliese, Nadelfilze, Polsterwatte, Gewebe, Papierstoff, Papierprodukt, Papier, Karton, Filter, Gestricke, als Heimtextilien, wie Bettwäsche, als Kleidungsstücke, als Füllstoff, Beflockungsstoff, Krankenhaustextilien, wie Unterlagen, Windel oder Matratzen, als Stoff für Wärmedecken, Schuheinlagen, sowie Wundverbände verwendet werden. Ausführungsbeispiele der Erfindung können sowohl in verschiedensten technischen Bereichen als auch in der Medizin und in Kosmetik und Wellness anwendbar sein. In der Medizin können zum Beispiel Materialien zur Wundbehandlung und Wundheilung aus einem Träger, der die mechanischen Eigenschaften bestimmt, und einem biokompatiblem Beschichtungsmaterial aufgebaut sein, das besonders verträglich mit der Haut und mit der Oberfläche der Wunde ist. Zahlreiche andere Anwendungen sind möglich.

Im Folgenden werden exemplarische Ausführungsbeispiele der vorliegenden Erfindung mit Verweis auf die folgenden Figuren detailliert beschrieben.
Figur 1 zeigt ein Flussdiagramm eines Verfahrens zum kontinuierlichen Bereitstellen eines aufbereiteten Ausgangsstoffs gemäß einem exemplarischen Ausführungsbeispiel der Erfindung.
Figur 2 zeigt ein Flussdiagramm eines Verfahrens zum Herstellen eines regenerierten cellulosischen Formkörpers aus dem aufbereiteten Ausgangsstoff gemäß einem exemplarischen Ausführungsbeispiel der Erfindung.
Figur 3 zeigt eine Apparatur zum Bereitstellen des aufbereiteten Ausgangsstoffs und zum Herstellen eines regenerierten cellulosischen Formkörpers mittels eines Lyocell-Verfahrens aus dem aufbereiteten Ausgangsstoff gemäß einem exemplarischen Ausführungsbeispiel der Erfindung.
Figur 4 zeigt eine mittels eines Lyocell-Verfahrens hergestellte Cellulosefaser.
Figur 5 zeigt eine mittels eines Viskose-Verfahrens hergestellte Cellulosefaser.
Figur 6 zeigt eine natürliche Cellulosefaser aus einer Baumwollpflanze.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel wird bei der Herstellung eines geeigneten Alttextilmixes (vordefinierte Zusammensetzung) beispielshaft folgendermassen vorgegangen: aus einem rohen (noch unaufbereiteten) Alttextilmix mit hohem Anteil an Baumwolle oder Zellulosefasern (z.B. Viskose, Lyocell) und synthetische Polymerfaseranteilen (z.B.: PP, PET, PA, PUR-TPE) wird durch Zerkleinern, Flotation, selektives Lösen, Kochung, oder andere grossindustrielle Standardprozesse eine Aufbereitung gemacht, wobei eine 100%-Entfernung von nicht erwünschten Bestandteilen sehr aufwändig wird. Deshalb wurden folgende erfindungsgemässe Materialmix ermittelt: 1) Anteil von nichttextilen Zusatzmaterialien aus der Liste (Knöpfe, Nieten, Klammern, Ösen) ist unter 0,1%, Anteil von Polyamiden ist unter 0,1%, Anteil von PTFE, ist unter 0,1%, Anteil Polyesteranteil (PET) ist unter 30%, Anteil von Polyolefinen (PE und bevorzugt PP) ist unter 1%, Anteil von TPE auf Basis von PEG-PUR ist unter 10%, Anteil von Polyacrylnitril (PAN) ist unter 1%, restliche Bestandteile sind überwiegend cellulosebasierte Textilien; oder 2) über 60% Cellulose, unter 10% PET, bevorzugt unter 5%, noch besser unter 2%, unter 15% PUR-TPE mit Weichsegmenten aus Polyolefinethern oder aliphatischen Estern (Elastan), unter 5% PA, Beifügung von über 0,1% AO-Stabilisator zur Verhinderung des oxidativen Abbaus von erwünschten Polymeren zu unerwünschten Oligomeren (welche negative Produkteigenschaften induzieren würden, wie instabile mechanische Eigenschaften, Versprödung, Verfärbungsneigung, usw.).

Gemäß einem exemplarischen Ausführungsbeispiel wird auf folgende Details bei der stoffgemischlichen Herstellung der Beigaben in die NMMO-Lösung Rücksicht genommen: Alttextilien die zur Rezyklierung zur Verfügung stehen werden aufgrund der folgenden Charakteristika selektiert und in geeigneter Form als Bestandteile des Stoffgemischs aufbereitet und z.B. dem Lyocellprozess zugeführt: a) Reduktion auf die textilen Teile (also Entfernung von Knöpfen, Nieten, Zippverschlüsse, Klettverschlüssen, Applikationen usw.); b) Gezielte Selektion oder Anteilsbestimmung zur späteren anteiligen Zusammenführung der Stoffströme von folgenden Faserbestandteilen: i) Cellulosische Fasern: diese sind erwünscht, unterscheiden sich untereinander durch Molekulargewichte und dadurch Löslichkeit im NMMO (Viskosität), Einstellung und Angleichung durch alkalische Behandlung. Im Idealfall machen diese Materialien 100% der Rezyklattextilien aus. Zu diesen Materialien zählen Baumwolle, Viskose, Lyocell, Leinen, usw.; ii) Polyamide: in NMMO unlöslich, Abbau durch saure Hydrolyse. Im typischen Rohalttextilmixturen sind Wolle bis zu 80%, Polyamide bis zu 25%, in bestimmten Geweben enthalten, welche durch Sortierung einfach selektioniert werden können (Pullover, "Wollcharakter"). Keine reale Möglichkeit der Entfernung durch selektives Lösen. Zu diesen Materialien gehören Wolle, Seide, synthetisches Polyamid PA6 und PA6.6 (Nylon. Perlon); iii) Polyester: in NMMO unlöslich, Abbau durch alkalische Hydrolyse mit Rückgewinnung des Säureanteiles, Möglichkeit der Trennung durch selektives Lösen. Recyclinganteile bis zu 30% in Geweben. Zu diesen Materialien gehören z.B. PET und Elastopolyester; iv) Polyolefine: in NMMO unlöslich, keine Abbaumöglichkeit durch Hydrolyse, jedoch Abtrennung durch selektives Lösen. Geringer Gehalt in angelieferten Recyclinggeweben (unter 1%). Zu diesen Materialien gehören z.B. PP als Faser und PE als Schmelzkleber in Vliesen; v) Andere: PEG-PUR bis zu 5% in NMMO löslich, bis zu 10% in Geweben, PAN In NMMO unlöslich, beide durch scharfe saure Hydrolyse abbaubar. PTFE: unlöslich und nicht abbaubar. Durch Sortierung zumeist beherrschbar (z.B. Anoraks...). Zu diesen Materialien gehören z.B. PEG-PUR (Elastan, Lycra, Spandex), Polyacrylnitril (PAN), PTFE (Goretex).

Gemäß einem weiteren exemplarischen Ausführungsbeispiel werden residuale Polymere aus Ausgangsstoffen als Haftungsverstärker unter Cellulosefasern oder als thermoplastischen Eigenschaftsverstärker innerhalb eines LyocellFormkörpers verwendet. Sie bleiben im Wesentlichen inert bis zur Fertigstellung eines bestimmten Schrittes im Produktionsprozess. Insbesondere lässt sich somit eine nachträgliche Versteifung eines Gewebes durch Wärme (analog Schmelzklebstoff) erreichen (z.B. bügelfreie Hemden, Plissieren, usw.). Zur Herstellung von Geweben, welche die Eigenschaft einer hoher Formstabilität haben (z.B. bügelfrei), wird üblicherweise ein aufwendiges Verfahren eingesetzt. Dies kann beispielsweise die Kombination sehr aufwendiger chemischer Verfahren sein. Sie lässt ein Hemd lange Zeit wie neu aussehen. Ebenso möglich ist die sogenannte "Feuchtvernetzung", bei der zwischen den Molekülen von Baumwollcellulose eine elastische Brücke gebaut wird. Diese Brücke zieht den Stoff nach dem Waschen wieder in Form.

Durch die gezielte Steuerung des Anteils von residualen Polymeren (z.B. Poylurethane aus Elastan von Mischtextilien) gemäß einer Ausführung lässt sich jedoch eine gewisse Thermoplastizität in einer Lyocellfaser erzielen, welche den entsprechenden Anteil von residualen Polymeren aus einem Ausgangsstoff via den Abreicherungsprozess, gemäß einer Ausführung, über ein Lyocell-Verfahren wieder in einen Lyocell-Formkörper zurückführt.

Gemäß einem exemplarischen Ausführungsbespiel wird durch die Voraufbereitung des Alttextilmixes die nachfolgende Abreicherung von Fremdmaterialien minimiert, bzw. die Einstellung der gewünschten Restkonzentrationen erleichtert. In Textilrezyklaten bereits vorhandene anorganische Restbestandteile sind z.B. Metallverbindungen (vorwiegend Metalloxide, insbesondere TiO₂, Al₂O₃, MgO, SiO₂, CeO₂, Mg(OH)₂, Al(OH)₃, ZnO). Die Funktionalisierung dieser Oxide ist z.B. zur Manifestation unterschiedlicher Eigenschaften am hergestellten Formkörper (z.B. Flammschutz, Antireflexion, Biozid, usw.) geeignet.

Gemäß einem exemplarischen Ausführungsbespiel wurde weiter gefunden, dass folgende Stoffe geeignete AOs sind: HALS-Stabilisatoren, mehrwertige Phenole, insbesondere alkylierte Bi- und Triphenole, Tocopherol, oligomere Lignine, und Gallate. Diese haben den Vorteil, dass sie bereits als Stabilisatoren zur Maskierung von Schwermetall (Komplexierung) in NMMO-Dope bereits im Einsatz erprobt sind und deren grosstechnische Prozessbeherrschung problemlos ist. Überraschend wurde nun gefunden, dass diese AOs in NMMO, das auf Grund seiner Struktur (N-Oxid) eher als Oxidant wirkt, dennoch den oxiddativen Abbau von Polymeren verhindern, insbesondere den von Elastan, das zur Kompatibilisierung im Mix gebraucht wird.

Gemäß einem exemplarischen Ausführungsbespiel wird dem Umstand Rechnung getragen, dass gewisse Cellulose-fremde Stoffe in einem bestimmten Mass in einen Lyocell-Formkörper eingebunden werden können. Erstaunlicherweise wurde gefunden, dass gewisse nicht Cellulose-basierte Restmaterialien als erwünschte Hilfsstoffe betrachtet werden können, welche helfen andere nicht Cellulose-basierte Restmaterialien in erhöhtem Masse in einen Lyocellformkörper einzubinden. Eine solche Stoffgruppe, welche sowohl nicht-cellulosisches Nebenbestandteil als auch Einbindungsvermittler ist, sind die TPE-artigen Kunststoffe (z.B. Elastane). Dieser erwähnte Einbindungseffekt geht sogar so weit, dass geringe Anteile (unter 2%) von Polyamiden(PA) und Polyestern (PET unter 2%) mitverarbeitet werden können. Im Rezyklat-Verarbeitungsprozess ist dies ein ausgesprochener Vorteil, da die fast völlige Entfernung der genannten Polymeren unverhältnismässig aufwändig ist und die mögliche Akzeptanz geringer Restmengen die Rezyklataufbereitung massiv erleichtert, da gerade diese Polymere in Textilrezyklaten sehr häufig und verbreitet enthalten sind. Erklärt wird dieses Verhalten, durch den Kompatibilitätseffekt von Elastan zwischen PA-PET und Cellulose. Der PUR-Anteil von Elastan ist dafür verantwortlich, da PUR gleichzeitig ein Polyester als auch ein Polyamid ist (R1.NH.CO.O.R2). Der Polyalkylenoxydanteil in TPEs wie Elastan, ist darüber hinaus, dank seiner typischen Etherstruktur, für die Homogenisierung/Mischung mit den Glycanetherbindungen der Cellulose verantwortlich. Diese Mehrfachwirkung wird erfindungsgemäss auch auf diese mehrfache Weise utilisiert: i) wird durch die Prozesstemperaturen des Lyocellprozesses das Elastan in geeigneter Weise mit der Cellulose durch Wasserstoffbrücken verbunden; ii) die Polyamidähnlichkeiten dieser TPE's erlauben es typische Faserpolyamide (PA6 oder PA6.6 oder PA6.10) aus Altmaterialien einzubinden; iii) die Etherstruktur führt zu einer hohen Homogenisierung des Dope vor dem Spinnprozess und dadurch zu einer sehr guten Durchmischung (insbesondere auch auf chemischer Ebene, da die Artverwandschaft der Etherstruktur der TPE's sehr ähnlich zur Etherstruktur der Cellulose ist; und iv) die Polyestherähnlichkeiten dieser TPE's erlauben es typische Faserpolyester aus Altmaterialien einzubinden. Insbesondere lässt sich durch Mischung von verschiedenen Alttextilienzusammensetzungen eine geeignete Rezyklatqualität einstellen und so die nachfolgende Utilisierung gezielt steuern.

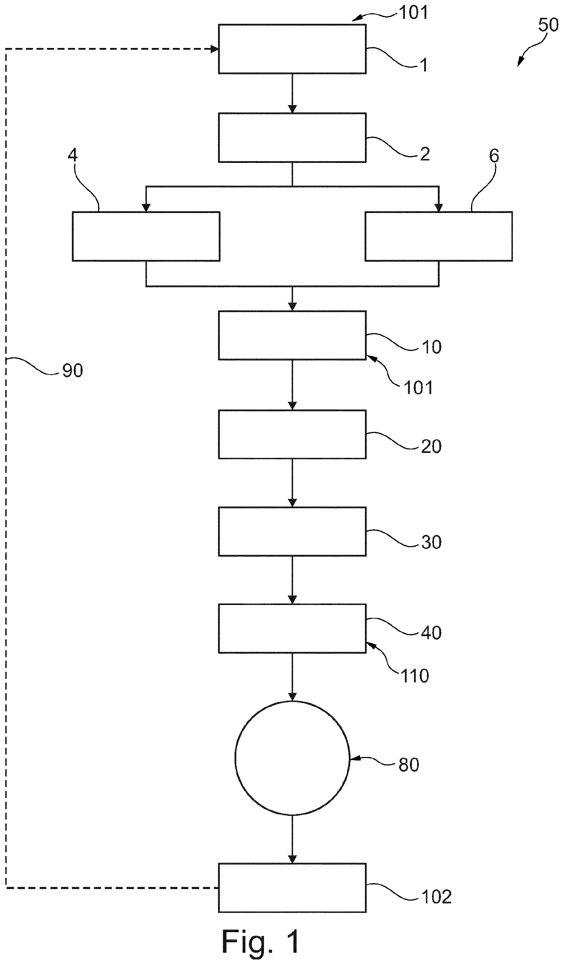

**Figur 1** zeigt ein Flussdiagramm eines Verfahrens zum kontinuierlichen Bereitstellen (siehe Bezugszeichen 50) eines aufbereiteten Ausgangsstoffs 110 gemäß einem exemplarischen Ausführungsbeispiel der Erfindung. Zunächst wird ein Cellulose-haltiger Ausgangsstoff 101 bereitgestellt 1, bei welchem es sich um einen Mix aus Alttextilien (Altkleider und/oder Reste einer Kleidungsherstellung) handelt. Dieser kann aus verschiedenen Quellen (Pre-/Post-Consumer) angeliefert werden und sehr inhomogen sein. Die Alttextilien 101 weisen nicht nur Cellulose auf sondern auch teilweise hohe Gehalte von synthetischen Fasern (z.B. Polyester). In einem ersten Schritt des Bereitstellens (siehe Block 1) kann zunächst ein mechanisches Zerkleinern 1 der Alttextilien 101 durch Schreddern erfolgen. Dadurch können vor allem große nicht-cellulosische Störstoffe aus dem Ausgangsstoff 101 entfernt werden, beispielsweise Knöpfe, Nähte und Drucke der Altkleider, die zum Erzeugen des Ausgangsstoffs 101 zumindest teilweise verwendet worden sind. Durch das mechanische Zerkleinern kann zum Beispiel der Ausgangsstoff 101 in Einzelfasern zertrennt werden.

In einem weiteren Schritt wird die Zusammensetzung der Alttextilien bestimmt (siehe Block 2). Dieser Schritt kann optional auch vor dem Zerkleinern stattfinden. Das Bestimmen der Zusammensetzung kann kontinuierlich an einem (Recycling) Strom von Alttextilien stattfinden. Hierzu können verschiedene automatische Messtechniken (z.B. optische und/oder spektroskopische Methoden) zum Einsatz kommen. Alternativ kann auch ein geschulter Bearbeiter die Zusammensetzungen bestimmen. Ferner kann die Zusammensetzung auch zumindest teilweise vorbekannt sein (z.B. bei Kleidungsresten aus der Produktion). Die bestimmte Zusammensetzung (Ist-Wert) kann daraufhin mit einem Soll-Wert, der vordefinierten Zusammensetzung, verglichen werden.

Entsprechend der Abweichung von dem Soll-Wert kann nun ein selektives Anreichern (siehe Block 4) und/der ein selektives Abreichern (siehe Block 6) durchgeführt werden. Der Ausgangsstoff 101 ist eine Alttextil Mischung mit Cellulosefasern und synthetischen Fasern. Um eine vordefinierte Zusammensetzung zu erreichen, werden Chargen mit bekannten Zusammensetzungen (bekannten Mengen von Zusammensetzungskomponenten) gemischt, so dass die Mischung am Ende die vordefinierte Zusammensetzung aufweist. Besonders gut geeignet sind die oben beschriebenen (Verschnitt) Reste aus der Kleidungsproduktion, welche eine im Wesentlichen bekannte Zusammensetzung aufweisen. Weiterhin können Alttextilien mit bekannter Zusammensetzung, z.B. sehr hohem Baumwollgehalt, zugegeben werden, um den Cellulosegehalt zu erhöhen. Ferner können auch Zusammensetzungskomponenten mit zumindest teilweise bekannter Zusammensetzung dem Ausgangsstoff 101 entzogen werden. Beispielswiese kann gezielt Sportbekleidung entfernt werden, welche einen besonders hohen Anteil an Polyester aufweist. Weiterhin kann ein mechanisches Trennen, z.B. eine Dichtetrennung, insbesondere mittels eines Flotationsverfahrens, durchgeführt werden, um z.B. Polyester und/oder Polypropylen selektiv von Cellulose abzureichern. Hierbei können Faserbestandteile in einem flüssigen (wässrigen) Medium suspendiert werden. Trennen der nicht-cellulosischen Fasern von den cellulosischen Fasern gelingt aufgrund unterschiedlicher physikalischer Eigenschaften in dem flüssigen Medium, insbesondere unterschiedlichen gravitativen, zentrifugalkraftbezogenen, flotativen und/oder elektrostatischen Eigenschaften.

Der Ausgangsstoff 101 mit der vordefinierten Zusammensetzung wird dann der Reaktionsvorrichtung 150 kontinuierlich zugeführt (siehe Block 10). Der Ausgangsstoff ist hierbei zerkleinert/geshreddert und kann dem Reaktor 150 direkt als Feststoff oder mittels eines zusätzlichen Lösungsmittels zugeführt werden. Die Reaktorvorrichtung 105 weist einen kontinuierlichen Kocher (Digester) auf, welcher einen kontinuierlichen Koch-Prozess zum Aufbereiten (Schritt 20) des Ausgangsstoffs betreibt. Der Koch-Prozess ist sauer (z.B. Sulfitverfahren) oder alkalisch (z.B. Sulfat/Kraft-Verfahren oder direkte Anwendung von Natronlauge). Hierbei können Ausgangsstoff und Kochlösung der Reaktorvorrichtung 105 zunächst getrennt zugeführt werden und dann vermischt werden. Es kann aber auch zu einer vorherigen Vermischung kommen, so dass der Ausgangsstoff 101 zumindest teilweise in der Kochlösung gelöst der Reaktorvorrichtung 105 zugeführt wird. Unter Anwendung von hoher Temperatur (z.B. 90°C bis 185°C) und/oder hohem Druck (z.B. 1 bis 21 Bar) findet die Aufbereitung (siehe Block 20) des Ausgangsstoffes 101 statt. Die Reaktorvorrichtung 105 kann eine Förderschnecke aufweisen, um den Ausgangsstoff 101 kontinuierlich durch den Kocher zu transportieren. Während des Koch-Prozesses kommt es zum zumindest teilweisen Abbau von Kunststoffen (z.B. Polyester Verseifung). Auf diese Weise kann Kunststoff-abgereicherte Cellulose, aber auch hochreine Cellulose bereitgestellt werden. Stromabwärts des Kochers kann ein Reinigungsschritt durchgeführt werden. Danach folgt ein kontinuierliches Abführen (siehe Block 30) des aufbereiteten Ausgangsstoffs 110. Der aufbereitete Ausgangsstoff 110 liegt als konzentrierte Cellulose (im Vergleich zum Ausgangsstoff) vor, welche optional noch Reste von Kunststoffen aufweist.

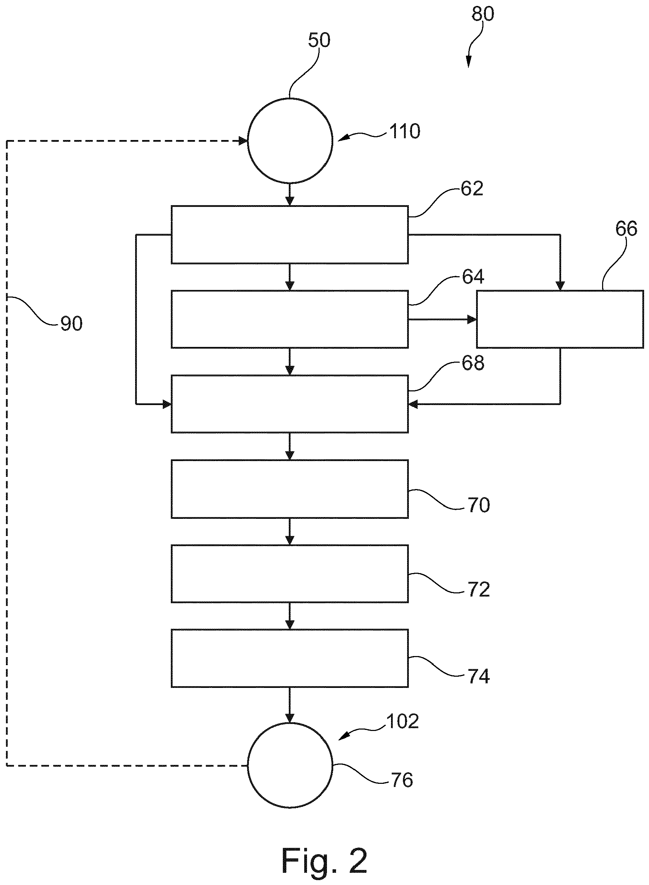

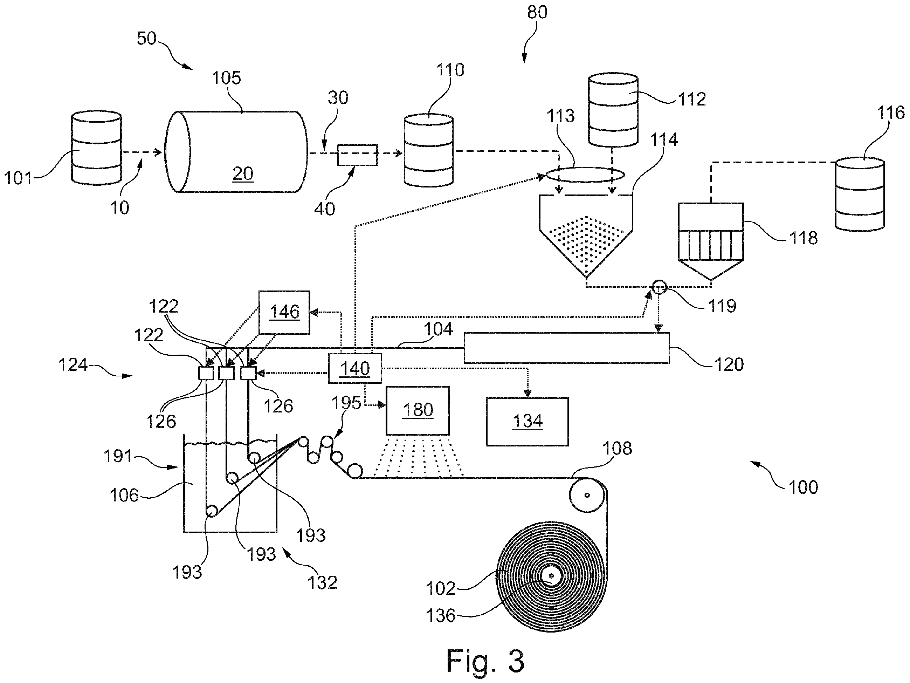

Der aufbereitete Ausgangsstoff 101 kann noch weitere (kontinuierliche) Aufbereitungsschritte durchlaufen (siehe Block 40). Diese umfassen z.B. einen weiteren Reinigungsschritt und einen Bleich-Prozess. Der entsprechend aufgereinigte Cellulose-aufweisende Ausgangsstoff 110 wird danach, wie in Block 80 dargestellt, einem Verfahren zum Herstellen eines cellulosischen Formkörpers 102 zugeführt. Ein Beispiel für ein solches Verfahren ist ein Lyocellverfahren, welches bezüglich der Figuren 2 und 3 (siehe unten) detailliert beschrieben wird. Der erhaltene Formkörper 102 (z.B. als Faser in einem Lyocelltextil oder auch eine Papierfaser) kann nach Verwendung erneut recycelt werden (mit Bezugszeichen 90 dargestellt) und in erneut dem Cellulose-haltigen Ausgangsstoff 101 beigefügt werden.

**Figur 2** zeigt ein Flussdiagramm 80 eines Verfahrens zum Herstellen eines regenerierten cellulosischen Formkörpers 102 (vergleiche Figur 3) aus dem aufbereiteten Ausgangsstoff 110 gemäß einem exemplarischen Ausführungsbeispiel der Erfindung.

Der Ausgangsstoff 110 wird mittels eines kontinuierlichen Aufbereitungsprozesses bereitgestellt (siehe Block 50, vergleiche Figur 1). Wie mit Block 50 dargestellt, kann ein so hergestellter aufbereiteter Ausgangsstoff 110 für ein nachfolgendes Lyocell- oder Viskoseverfahren verwendet werden, wobei ersteres im Weiteren näher beschrieben wird.

Im Weiteren wird beschrieben, wie auf Basis des Cellulose aufweisenden Ausgangsstoffs 110 Formkörper 102 aus Cellulose gemäß einem Ausführungsbeispiel der Erfindung hergestellt werden können. Hierfür wird der Ausgangsstoff 110 einer Apparatur (100, siehe Figur 3) zum Durchführen eines Lyocell-Verfahrens zugeführt. Zunächst erfolgt ein optionales Vorbereiten (Schritt 62) des aufbereiteten Ausgangsstoffs 110, z.B. ein Reinigen oder ein Zerkleinern.

Es ist auch möglich (siehe Block 64), den Cellulose aufweisenden Ausgangsstoff 110 mit anderen Cellulose aufweisenden Materialien gemeinsam für das nachfolgende Lyocell-Verfahren einzusetzen. Somit kann der Ausgangsstoff 110 mit einem weiteren Ausgangsstoff vermischt werden, welcher Cellulose und zumindest einen synthetischen Kunststoff aufweist, siehe Block 64. Dieser zugeführte weitere Ausgangsstoff weist einen Anteil an synthetischen Kunststoffen auf, welcher von dem Anteil an synthetischem Kunststoff in dem Ausgangsstoff 110 verschieden ist. Das Erzeugen des regenerierten cellulosischen Formkörpers kann nun basierend auf dem Ausgangsstoff 110 und dem weiteren Ausgangsstoff ausgeführt werden, so dass der regenerierte cellulosische Formkörper 102 einen vorbestimmten Anteil an synthetischem Kunststoff enthält. Der weitere Ausgangsstoff kann alternativ oder ergänzend zum Beispiel auch Reste aus einer Kleidungsherstellung aufweisen.

Unmittelbar nach dem Vorbereiten 62 bzw. unmittelbar nach dem Mischen 64 kann ein direktes Lösen 68 des (reinen bzw. gemischten) Ausgangsstoffs 110 in einem weiteren Lösungsmittel 116 (zum Beispiel tertiäre Aminoxide wie zum Beispiel N-Methylmorpholin-N-oxid (NMMO)) vorteilhaft ohne chemische Vorbehandlung erfolgen. Genauer gesagt kann der mechanisch zerkleinerte (und optional gemischte) Ausgangsstoff 110 insbesondere ohne chemische Reinigung und ohne Einstellung der Viskosität direkt in Lösung übergeführt werden. Auf diese Weise kann das Herstellungs- bzw. Recyclingverfahren außergewöhnlich einfach und schnell sowie umweltfreundlich durchgeführt werden.

Alternativ kann das Verfahren nach dem Vorbereiten 62 (oder nach dem Mischen 64) und vor dem Lösen 68 ein optionales chemisches Reinigen 66 des Ausgangsstoffs 110 aufweisen. Ein solches optionales Reinigen 66 kann zum Beispiel ein zumindest teilweises Entfernen von Farbstoffen durch Bleichen aufweisen. Dadurch ist es möglich, den Ausgangsstoff 110 vor einem nachfolgenden Lösen 68 des Ausgangsstoffs 110 in Lösungsmittel 116 ganz oder teilweise zu entfärben, beispielsweise um weiße oder graue Formkörper 102 herzustellen. Es ist alternativ oder ergänzend auch möglich, dass im Rahmen des optionalen chemischen Reinigens 66 der Ausgangsstoff 110 (vor oder nach seinem Lösen 68) zumindest teilweise von Fasern des Ausgangsstoffs 110 vernetzenden Vernetzern befreit wird. In Anwendungen, in denen solche Vernetzer zwischen den Fasern des Ausgangsstoffs 110 vorliegen, kann der Ausgangsstoff 110 zum Beispiel mittels einer alkalischen oder einer sauren Vorbehandlung von diesen Vernetzern ganz oder teilweise befreit werden. Dies verbessert die Lösbarkeit des Ausgangsstoffs 110 zusätzlich. Mittels des Reinigens 66 kann optional zumindest ein Teil von synthetischem Kunststoff entfernt werden, falls dies gewünscht ist. Beispielsweise kann auf diese Weise der Anteil von synthetischem Kunststoff in dem herzustellenden Formkörper 102 eingestellt bzw. beeinflusst werden.

Nach dem Lösen 68 des Ausgangsstoffs 110 in Lösungsmittel (bevorzugt NMMO) kann die erhaltene Lyocell-Spinnlösung 104 durch eine oder mehrere Spinndüsen gepresst werden, wodurch Fäden bzw. Filamente honigzäher Viskosität entstehen (siehe Block 70, der dieses Spinnen betrifft).

Während und/oder nach dem Fallen dieser Fäden bzw. Filamente werden diese in Wirkverbindung mit einem wässrigen Milieu gebracht und dadurch verdünnt. Die Konzentration des Lösungsmittels 116 der Fäden bzw. Filamente wird dadurch in einem wässrigen Nebel bzw. einem wässrigen Flüssigkeitsbad so weit reduziert, dass die Lyocell-Spinnlösung in eine feste Phase aus Cellulose-Filamenten überführt wird. Anders ausgedrückt kommt es zu einem Präzipitieren, Fällen oder Koagulieren der Cellulose-Filamente, siehe Bezugszeichen 72. Dadurch wird eine Vorform des Formkörpers 102 erhalten.

Ferner kann das Verfahren ein Nachbearbeiten 74 der ausgefällten Lyocell-Cellulose zum Erhalten des Formkörpers 102 aus der Vorform des Formkörpers 110 aufweisen. Eine solche Nachbearbeitung kann zum Beispiel ein Trocknen, Imprägnieren und/oder Umformen der erhaltenen Filamente zu dem finalen Formkörper 102 umfassen. Zum Beispiel kann der Formkörper 102 durch das beschriebene Herstellungsverfahren zu Fasern, einer Folie, einem Gewebe, einem Vlies, einer Kugel, einem porösen Schwamm oder Beads verarbeitet werden und dann einer weiteren Nutzung zugeführt werden (vergleiche Bezugszeichen 76).

Mit Vorteil können nach Nutzung des Formkörpers 102 dessen Cellulose und optionale synthetische Kunststoffe von neuem wiedergewonnen werden, indem ein weiteres Verfahren entsprechend der Verfahrensschritte zwischen Bezugszeichen 50 und 74 durchgeführt wird (siehe Block 90). Alternativ können die Cellulose und optionaler weiterer synthetischer Kunststoff des Formkörpers 102 in einem anderen Verfahren, beispielsweise einem Viskoseverfahren, wiedergewonnen werden.

**Figur 3** zeigt eine Apparatur 100 zum kontinuierlichen Bereitstellen eines aufbereiteten, Cellulose-aufweisenden, Ausgangsstoffs 110 und zum Herstellen eines regenerierten cellulosischen Formkörpers 102 mittels eines Lyocell-Verfahrens auf Basis des Ausgangsstoffs 110 gemäß einem exemplarischen Ausführungsbeispiel der Erfindung, das bezugnehmend auf die Figuren 1 und 2 beschrieben wurde.

Figur 3 zeigt also eine Apparatur 100 gemäß einem exemplarischen Ausführungsbeispiel der Erfindung zum Herstellen eines Cellulose aufweisenden Formkörpers 102, der zum Beispiel in Form eines Vlieses (Nonwoven), als Faser, Folie, Kugel, Textilgewebe, Schwamm oder in Form von Beads oder Flakes hergestellt werden kann. Gemäß Figur 3 wird der Formkörper 102 direkt aus einer Spinnlösung 104 hergestellt. Letztere wird mittels eines Koagulations-Fluids 106 (insbesondere aus Luftfeuchtigkeit) und/oder eines Koagulations-Bads 191 (beispielsweise ein Wasserbad, das optional tertiäre Aminoxide wie zum Beispiel N-Methylmorpholin-N-oxid (NMMO) aufweist) in Cellulosefasern 108 als Formkörper 102 umgewandelt. Mittels der Apparatur 100 kann ein Lyocell-Verfahren ausgeführt werden. Auf diese Weise können als Formkörper 102 zum Beispiel im Wesentlichen endlose Filamente oder Fasern 108 oder Mischungen im Wesentlichen endloser Filamente und Fasern 108 diskreter Länge hergestellt werden. Eine Mehrzahl von Düsen, die jeweils eine oder mehrere Öffnungen 126 (die auch als Spinnlöcher bezeichnet werden können) haben, sind bereitgestellt, um Lyocell-Spinnlösung 104 auszustoßen.

Wie Figur 3 entnommen werden kann, kann einem Speichertank 114 über eine Dosiereinrichtung 113 ein Cellulose basierter Ausgangsstoff 110 dem Lyocellverfahren 80 zugeführt werden. Der Ausgangsstoff 110 ist ein aufbereiteter Ausgangsstoff 110, welcher in einem kontinuierlichen Aufbereitungsverfahren 50 gewonnen wurde (siehe Figur 1 oben).

Hierfür wird ein Cellulose-aufweisender Ausgangsstoff 101, nämlich Altetxtilien, mit einer vordefinierten Zusammensetzung zu einer Reaktorvorrichtung 105 kontinuierlich zugeführt (siehe 10). In der Reaktorvorrichtung 105 wird der Cellulose-aufweisende Ausgangsstoff 101 kontinuierliche aufbereitet (siehe 20), um den aufbereiteten Cellulose-aufweisenden Ausgangsstoff 110 zu erhalten. Danach wird der aufbereitete Cellulose-aufweisende Ausgangsstoff 110 kontinuierlich aus der Reaktorvorrichtung 105 abgeführt. Ferner wird der aufbereitete Cellulose-aufweisende Ausgangsstoff 110 einem kontinuierlichen Bleich-Prozess (siehe 40) unterworfen.

Gemäß einem Ausführungsbeispiel kann ein Wassereintrag in den Cellulose basierten Ausgangsstoff 110 durch ein unten näher beschriebenes Lösungsmittel 116 (insbesondere NMMO) erfolgen. Auch kann der Cellulose basierte Ausgangsstoff 110 selbst bereits eine gewisse Restfeuchte enthalten (trockener Zellstoff zum Beispiel hat häufig eine Restfeuchte von 5 Gewichtsprozent bis 8 Gewichtsprozent). Insbesondere kann gemäß dem beschriebenen Ausführungsbeispiel der Ausgangsstoff 110 ohne Vorbefeuchtung direkt in eine Mischung aus Wasser und Lösungsmittel 116 gegeben werden. Ein in Figur 3 gezeigter optionaler Wasserbehälter 112 kann dann weggelassen werden.

Gemäß einem alternativen Ausführungsbeispiel kann der Cellulose aufweisende Ausgangsstoff 110 zusätzlich angefeuchtet werden, um dadurch feuchte Cellulose bereitzustellen. Zu diesem Zweck kann Wasser aus einem optionalen Wasserbehälter 112 dem Speichertank 114 über die Dosiereinrichtung 113 zugeführt werden. Daher kann die Dosiereinrichtung 113, gesteuert mittels einer Steuereinrichtung 140, dem Speichertank 114 einstellbare relative Mengen von Wasser und Ausgangsstoff 110 zuführen.

Ein geeignetes Lösungsmittel 116, bevorzugt tertiäre Aminoxide wie zum Beispiel N-Methylmorpholin-N-oxid (NMMO), beziehungsweise eine wässrige Mischung des Lösungsmittels 116, zum Beispiel eine 76%ige Lösung von NMMO in Wasser, ist in einem Lösungsmittelbehälter enthalten. Die Konzentration des Lösungsmittels 116 kann in einer Konzentriereinrichtung 118 entweder durch Zugabe von reinem Lösemittel oder Wasser eingestellt werden. Das Lösungsmittel 116 kann dann mit dem Ausgangsstoff 110 mit definierbaren relativen Mengen in einer Mischeinheit 119 gemischt werden. Auch die Mischeinheit 119 kann mittels der Steuereinheit 140 gesteuert werden. Dadurch wird der Cellulose aufweisende Ausgangsstoff 110 in dem konzentrierten Lösungsmittel 116 in einer Löseeinrichtung 120 mit einstellbaren relativen Mengen gelöst, wodurch die Lyocell-Spinnlösung 104 erhalten wird.. Die relativen Konzentrationsbereiche (auch als Spinnfenster bezeichnet) der Komponenten Ausgangsstoff 110, Wasser und Lösungsmittel 116 in der Spinnlösung 104 zur Herstellung von cellulosischen Regeneratformkörpern nach dem Lyocell-Verfahren können, wie einem Fachmann bekannt, geeignet eingestellt werden.

Die Lyocell-Spinnlösung 104 wird einer Fasererzeugungseinrichtung 124 zugeführt (die mit einer Anzahl von Spinnbalken oder Jets 122 ausgebildet sein kann).

Wenn die Lyocell-Spinnlösung 104 durch die Öffnungen 126 der Jets 122 geführt wird, wird sie in eine Mehrzahl von parallelen Fäden aus Lyocell-Spinnlösung 104 aufgeteilt. Die beschriebene Prozessführung transformiert die Lyocell-Spinnlösung 104 in zunehmend lange und dünne Fäden, deren Eigenschaften durch entsprechende Einstellung der Prozessbedingungen, gesteuert durch die Steuereinheit 140, eingestellt werden können. Optional kann ein Gasfluss die Lyocell-Spinnlösung 104 auf ihrem Weg von den Öffnungen 126 zu einer Faseraufnahmeeinheit 132 beschleunigen.

Nachdem die Lyocell-Spinnlösung 104 sich durch die Jets 122 und weiter abwärts bewegt hat, interagieren die langen und dünnen Fäden der Lyocell-Spinlösung 104 mit dem Koagulations-Fluid 106.

Bei der Wechselwirkung mit dem Koagulations-Fluid 106 (zum Beispiel Wasser) wird die Lösungsmittelkonzentration der Lyocell-Spinnlösung 104 reduziert, sodass die Cellulose des Ausgangsstoffs 110 zumindest teilweise als lange und dünne Cellulosefasern 108 (die immer noch Reste von Lösungsmittel und Wasser enthalten können) koaguliert bzw. ausfällt.

Während oder nach der initialen Bildung der individuellen Cellulosefasern 108 aus der extrudierten Lyocell-Spinnlösung 104 werden die Cellulosefasern 108 an der Faseraufnahmeeinheit 132 aufgenommen. Die Cellulosefasern 108 können in das in Figur 3 dargestellte Koagulations-Bad 191 (zum Beispiel ein Wasserbad, optional aufweisend ein Lösungsmittel wie NMMO) eintauchen und können bei Wechselwirkung mit der Flüssigkeit des Koagulations-Bads 191 ihr Ausfällen abschließen. Abhängig von der Prozesseinstellung der Koagulation kann die Cellulose Cellulosefasern 108 bilden (wie gezeigt, wobei die Cellulosefasern 108 einstoffig bzw. integral miteinander verschmolzen ("merging") sein können oder als getrennte Cellulosefasern 108 vorliegen können) oder kann sich an der Faseraufnahmeeinheit 132 eine Folie bzw. ein Film aus Cellulose bilden (nicht in Figur 3 dargestellt).

Die Cellulosefasern 108 werden also aus den Spinndüsen der Jets 122 extrudiert und durch das Spinnbad bzw. Koagulations-Bad 191 (enthaltend zum Beispiel Wasser und NMMO in niedriger Konzentration zur Ausfällung/Koagulation) geführt, dabei werden die Cellulosefasern 108 um eine jeweilige Umlenkrolle 193 im Koagulations-Bad 191 geführt und außerhalb des Koagulations-Bads 191 einer Abzugsgalette 195 zugeführt. Die Abzugsgalette 195 sorgt für Weitertransport und Nachverstreckung der Cellulosefasern 108, um einen gewünschten Titer zu erreichen. Nach der Abzugsgalette 195 wird das Faserbündel aus den Cellulosefasern 108 in einer Wascheinheit 180 gewaschen, gegebenenfalls aviviert und schließlich geschnitten (nicht gezeigt).

Obwohl dies in Figur 3 nicht dargestellt ist, kann Lösungsmittel 116 der Lyocell-Spinnlösung 104, das aus den Cellulosefasern 108 beim Koagulieren und bei einem nachfolgenden Waschen in der Wascheinheit 180 entfernt worden ist, zumindest teilweise zurückgewonnen bzw. recycelt werden und in einem nachfolgenden Zyklus wieder in den Speichertank 114 übergeführt werden.

Während des Transports entlang der Faseraufnahmeeinheit 132 kann der Formkörper 102 (hier in Form der Cellulosefasern 108) mittels der Wascheinheit 180 gewaschen werden, indem Letztere eine Waschflüssigkeit zum Entfernen von Lösungsmittelresten zuführt. Danach kann der Formkörper 102 getrocknet werden.

Der Formkörper 102 kann darüber hinaus einer Nachbehandlung unterzogen werden, siehe die schematisch dargestellte Nachbehandlungseinheit 134. Zum Beispiel kann eine solche Nachbehandlung eine Hydroverschlingung, eine Nadelbehandlung, eine Imprägnierung, eine Dampfbehandlung mit einem unter Druck zugeführten Dampf und/oder ein Kalandrieren, etc., aufweisen.

Die Faseraufnahmeeinheit 132 kann den Formkörper 102 einer Aufwickeleinrichtung 136 zuführen, an welcher der Formkörper 102 aufgewickelt werden kann. Der Formkörper 102 kann dann als Rollgut einer Entität zugeführt werden, die Produkte wie zum Beispiel Wischtücher oder Textilien auf Basis des Formkörpers 102 herstellt.

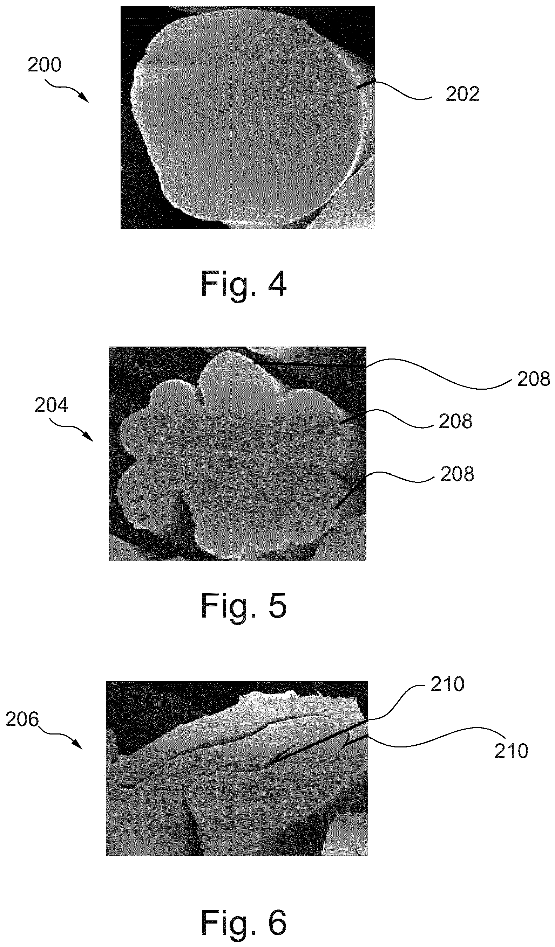

**Figur 4** zeigt eine mittels eines Lyocell-Verfahrens hergestellte Cellulosefaser 200 im Querschnitt. Die mittels eines Lyocell-Verfahrens hergestellte Cellulosefaser 200 hat eine glatte runde Außenfläche 202 und ist homogen und frei von makroskopischen Löchern mit Cellulosematerial ausgefüllt. Sie kann daher von einem Fachmann eindeutig von mittels eines Viskoseverfahrens hergestellten Cellulosefasern (siehe Bezugszeichen 204 in Figur 5) und von Cellulosefasern aus Baumwollpflanzen (siehe Bezugszeichen 206 in Figur 6) unterschieden werden.

**Figur 5** zeigt eine mittels eines Viskoseverfahrens hergestellte Cellulosefaser 204 im Querschnitt. Die Cellulosefaser 204 ist wolkenförmig und weist entlang ihres äußeren Umfangs eine Mehrzahl von bogenförmigen Strukturen 208 auf.

**Figur 6** zeigt eine natürliche Cellulosefaser 206 aus einer Baumwollpflanze im Querschnitt. Die Cellulosefaser 206 ist nierenförmig und weist im Inneren ein materialfreies Lumen 210 als vollumfänglich umschlossenen Hohlraum auf.

Anhand der signifikanten geometrischen bzw. strukturellen Unterschiede der Fasern gemäß Figur 4 bis Figur 6 ist es einem Fachmann möglich, zum Beispiel unter einem Mikroskop unzweideutig zu ermitteln, ob eine Cellulosefaser mittels des Lyocell-Verfahrens, mittels des Viskoseverfahrens oder natürlich in einer Baumwollpflanze gebildet worden ist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Verfahren zum kontinuierlichen Bereitstellen eines aufbereiteten Cellulose-aufweisenden Ausgangsstoffs (110), insbesondere eines Ausgangsstoffs (110) zum Herstellen eines cellulosischen Formkörpers (102), wobei das Verfahren aufweist:
Zuführen (10) eines Cellulose-aufweisenden Ausgangsstoffs (101) mit einer vordefinierten Zusammensetzung zu einer Reaktorvorrichtung (105);
kontinuierliches Aufbereiten (20) des Cellulose-aufweisenden Ausgangsstoffs (101) in der Reaktorvorrichtung (105), um den aufbereiteten Cellulose-aufweisenden Ausgangsstoff (110) zu erhalten; und
Abführen (30) des aufbereiteten Cellulose-aufweisenden Ausgangsstoffs (110) aus der Reaktorvorrichtung (105).

2. Das Verfahren gemäß Anspruch 1,
wobei der Cellulose-aufweisende Ausgangsstoff (101) ganz oder teilweise Reste aus einer Kleidungsherstellung und/oder Altkleider aufweist.

3. Das Verfahren gemäß Anspruch 1 oder 2, ferner aufweisend:
Einstellen (2) der vordefinierten Zusammensetzung, wobei das Einstellen (2) aufweist:
selektives Anreichern (4) zumindest einer Zusammensetzungskomponente und/oder
selektives Abreichern (6) zumindest einer Zusammensetzungskomponente.

4. Das Verfahren gemäß einem beliebigen der vorhergehenden Ansprüche, wobei das kontinuierliche Aufbereiten (20) ferner aufweist:
Durchführen eines kontinuierlichen Koch-Prozesses, insbesondere unter Verwenden einer alkalischen Kochlösung, weiter insbesondere einer Natriumhydroxid-haltigen Kochlösung.

5. Das Verfahren gemäß einem beliebigen der vorhergehenden Ansprüche, wobei die vordefinierte Zusammensetzung cellulosische Fasern aufweist, und wobei die vordefinierte Zusammensetzung der cellulosischen Fasern eine Schwankungsbreite von 2,5% oder weniger, insbesondere von 1% oder weniger, weiter insbesondere von 0,5% oder weniger, aufweist.

6. Das Verfahren gemäß einem beliebigen der vorhergehenden Ansprüche, wobei die vordefinierte Zusammensetzung synthetische Fasern, insbesondere Polyesterfasern, aufweist, und
wobei die vordefinierte Zusammensetzung der synthetischen Fasern, insbesondere der Polyesterfasern, eine Schwankungsbreite von 2,5% oder weniger, insbesondere von 1% oder weniger, weiter insbesondere von 0,5% oder weniger, aufweist.

7. Das Verfahren gemäß einem beliebigen der vorhergehenden Ansprüche, wobei die vordefinierte Zusammensetzung weitere synthetische Fasern aufweist, und
wobei die vordefinierte Zusammensetzung der weiteren synthetischen Fasern eine Schwankungsbreite von 0,5% oder weniger, insbesondere von 0,1% oder weniger, weiter insbesondere von 0,05% oder weniger, aufweist;
insbesondere wobei die weiteren synthetischen Fasern zumindest eines aus der Gruppe aufweisen, welche besteht aus: Polyamid, Polyacryl, und Elastan.

8. Das Verfahren gemäß einem beliebigen der vorhergehenden Ansprüche, wobei die vordefinierte Zusammensetzung 60% oder mehr, insbesondere 80% oder mehr, weiter insbesondere 92,5% oder mehr, cellulosische Fasern aufweist, und/oder
wobei die vordefinierte Zusammensetzung 30% oder weniger, insbesondere 16% oder weniger, weiter insbesondere 5% oder weniger, synthetische Fasern, insbesondere Polyesterfasern, aufweist.

9. Das Verfahren gemäß einem beliebigen der vorhergehenden Ansprüche, wobei die vordefinierte Zusammensetzung zumindest eines der folgenden Merkmale aufweist:
wobei die vordefinierte Zusammensetzung 4% oder weniger, insbesondere 1% oder weniger, weiter insbesondere 0,5% oder weniger, Polyamid aufweist;
wobei die vordefinierte Zusammensetzung 1% oder weniger, insbesondere 0,5% oder weniger, weiter insbesondere 0,1% oder weniger, Polyacryl aufweist;
wobei die vordefinierte Zusammensetzung 5% oder weniger, insbesondere 2,5% oder weniger, weiter insbesondere 1% oder weniger, Elastan aufweist.

10. Das Verfahren gemäß einem beliebigen der vorhergehenden Ansprüche, wobei die Reaktorvorrichtung (105) einen kontinuierlichen Kocher, insbesondere einen Pandia Kocher, aufweist.

11. Das Verfahren gemäß einem beliebigen der vorhergehenden Ansprüche, ferner aufweisend:
Durchführen eines kontinuierlichen Nachfolge-Prozesses (40), insbesondere eines Bleich-Prozesses, nach dem kontinuierlichen Abführen (30).

12. Ein Verfahren zum Herstellen eines, insbesondere regenerierten, cellulosischen Formkörpers (102), das Verfahren aufweisend:
Bereitstellen (50) eines aufbereiteten Cellulose-aufweisenden Ausgangsstoffs (110) gemäß einem beliebigen der vorhergehenden Ansprüche; und
Bilden (80) des cellulosischen Formkörpers (102) aus dem aufbereiteten Cellulose-aufweisenden Ausgangsstoff (110).

13. Das Verfahren gemäß Anspruch 12,
wobei das Bilden (80) des cellulosischen Formkörpers (101) aus dem aufbereiteten Ausgangsstoff (110) eines aufweist aus der Gruppe welche besteht aus: einem Lyocellverfahren, einem Viskoseverfahren, insbesondere einem Carbamatverfahren oder einem Kaltalkaliverfahren, einem Papierherstellungsverfahren.

14. Das Verfahren gemäß Anspruch 12 oder 13,
wobei der, insbesondere regenerierte, cellulosische Formkörper (102) ausgewählt ist aus der Gruppe, welche besteht aus: einem Filament, einer Faser, einer Folie, einem Schwamm, einer Mikrokugel, einem Bead, oder einem Papierstoff.

15. Verwenden eines kontinuierlichen Kochaggregats (105) zum kontinuierlichen Aufbereiten eines Cellulose-aufweisenden Ausgangsstoffs (101), insbesondere Alttextilien, mit einer vordefinierten Zusammensetzung.
